# EUROPÄISCHE PATENTANMELDUNG

(11) **EP 4 714 613 A2**
(43) Veröffentlichungstag der Anmeldung: **25.03.2026**
(21) Anmeldenummer: 26156377.9
(22) Anmeldetag: 27.04.2022
(51) Int. Cl.: B25J 9/00

(54) **SYSTEM UND VERFAHREN ZUM KOMMISSIONIEREN VON FLATPACK-ARTIKELN**

(30) Priorität: 25.06.2021 DE 102021116496
(62) Teilanmeldung aus: 22726068.4
(71) Anmelder: SSI Schäfer Automation GmbH (DE), 97232 Giebelstadt (DE)
(72) Erfinder: Langenbach, Tim, 59439 Holzwickede (DE)
(74) Vertreter: Witte, Weller & Partner Patentanwälte mbB

(57) **Zusammenfassung**

Es werden ein Verfahren und ein System (10) zum Kommissionieren von Artikeln (12), insbesondere Flatpack-Artikeln (12), gemäß Kommissionier-Aufträgen offenbart, wobei das System aufweist: ein Regal, das sich im Wesentlichen entlang einer Längs- und Höhenrichtung des Systems erstreckt und das eine Vielzahl von Lagerplätzen aufweist, die eingerichtet sind, Quellpaletten zu lagern; einen ersten Portalroboter mit einer Manipulationseinheit, der eingerichtet ist, die Artikel umzusetzen; eine Packposition, die zur Pufferung einer Zielpalette eingerichtet ist; eine Vielzahl von Förderern; und eine Steuerung, die vorzugsweise eingerichtet ist, für jeden der Aufträge ein auftragsspezifisches Packmuster zu bestimmen, um durch den ersten Portalroboter mehrere der Artikel gemäß dem jeweiligen Auftrag von einer oder mehreren der Quellpaletten automatisiert der Packposition zuzuführen; wobei jeder der Förderer eine Aufnahmeposition, die innerhalb des Regals positioniert ist und die zur Aufnahme der Quellpaletten eingerichtet ist, sowie eine Abgabeposition aufweist, die innerhalb eines Aktionsraums des ersten Portalroboters positioniert ist und die zur, vorzugsweise dynamischen, Bereitstellung der Quellpaletten eingerichtet ist; wobei die Steuerung ferner eingerichtet ist zu veranlassen, dass solche der Quellpaletten von den Lagerplätzen über die Aufnahmepositionen zu den Abgabepositionen transportiert werden, die die Artikel speichern, die zum Packen der Artikel auf die Zielpalette gemäß dem jeweiligen Packmuster benötigt werden; wobei der erste Portalroboter den Aktionsraum definiert, innerhalb welchem die Manipulationseinheit beweglich ist und der zumindest die Abgabepositionen der Förderer enthält; und wobei der erste Portalroboter eingerichtet ist, die Artikel, die zum Packen gemäß dem jeweiligen Packmuster benötigt werden, von den Quellpaletten an den Abgabepositionen aufzunehmen und an einen Packpositionszuführförderer abzugeben, der sich durch den Aktionsraum erstreckt und der mit der Packposition hinsichtlich eines Materialflusses verbunden ist, wobei die Packposition innerhalb eines Aktionsraums eines zweiten Portalroboters, der über weitere der Förderer direkt mit dem Regal verbunden ist, positioniert ist oder wobei die Packposition außerhalb der Aktionsräume der Portalroboter positioniert ist.

## Beschreibung

Die vorliegende Offenbarung betrifft allgemein ein intralogistisches System und Verfahren zum automatisierten Kommissionieren von Artikeln, insbesondere von Flatpack-Artikeln. Vorzugsweise erfolgt die Kommissionierung vollautomatisiert. Quellen und Ziele der Kommissionierung werden durch palettenartige Ladungsträger repräsentiert.

Es gibt viele verschiedene automatisierte Kommissioniersysteme, die für die unterschiedlichsten Zwecke und Randbedingungen eingesetzt werden.

Die EP 1 462 393 B1 beschreibt ein vollautomatisiertes System, bei dem Artikel von artikelreinen Wareneingangspaletten auf Einzeltablare vereinzelt werden, so dass auf jedem Tablar immer nur ein Artikel sitzt. Die Wareneingangspaletten werden in einem Hochregallager bevorratet und zur Schaffung eines Kommissionierpuffers (Tablarlager) depalletiert. Artikel, die zur Abarbeitung eines Kommissionier-Auftrags benötigt werden, werden aus dem Tablarlager auf den Tablaren sitzend ausgelagert und kurz vor einer Packmaschine, nach einer Sequenzierung, vom Tablar getrennt. Die Packmaschine setzt die Artikel gemäß einem vorab bestimmten Packmuster auf eine Zielpalette um. Das System der EP 1 462 393 B1 wird insbesondere von Lebensmittelfilialisten eingesetzt. Dies bedeutet, dass das beschriebene System in Distributionszentren eingesetzt wird, wo üblicherweise Zielpaletten für eine Filiale des Lebensmittelhändlers zusammengestellt werden. Eine direkte Kommissionierung der Artikel von den Lagerpaletten auf die Zielpaletten ist nicht angedacht, insbesondere weil die Lagermaschinen im Hochregallager nicht ausreichend viele Wechselspiele durchführen können.

Des Weiteren sind Kommissioniersysteme im Umfeld des Getränkegroßhandels bekannt, wo Portalroboter zur vollautomatisierten Kommissionierung von Getränkekisten eingesetzt werden. Ein derartiges System ist in dem YouTube-Video "Bau-Projektverlauf Automatisiertes Handelslager Getränke" (www.youtube.com/watch?v=3OvSIMfit3k) gezeigt. Auch in diesem System werden die Artikel vorab von Quellpaletten vereinzelt und zu Türmen aufgeschichtet. Ein Einzeltablarlager wird ebenfalls eingesetzt. Die Quellpaletten werden mittels eines weiteren Portalroboters lagen- oder zeilenweise depalletiert, um dem Kommissionier-Portalroboter einzeln mittels Abstandsbildung auf einem Rollenförderer zugeführt zu werden. Der Kommissionierportalroboter stapelt die Einzelartikel anschließend wieder und setzt die Stapel auf die Zielpalette. Der Durchsatz (kommissionierte Artikel/Zeiteinheit) ist gering. Eine direkte Kommissionierung der Artikel (Getränkekisten) von den Quellpaletten herunter auf die Zielpaletten ist nicht möglich.

Die oben diskutierten Systeme sind ferner grundsätzlich nicht dazu geeignet, Flatpack-Artikel zu kommissionieren.

Weiterer Stand der Technik findet sich in den Dokumenten DE 10 2013 100 048 A1, DE 10 2018 123 179 A1 und US 5 733 098 A.

Es ist daher eine Aufgabe, ein verbessertes System und Verfahren zum Kommissionieren von Artikeln, insbesondere von Flatpack-Artikeln, bereitzustellen.

Diese Aufgabe wird gelöst durch ein System zum Kommissionieren von Artikeln, insbesondere Flatpack-Artikeln, gemäß Kommissionier-Aufträgen, wobei das System aufweist: ein Regal, das sich im Wesentlichen entlang einer Längs- und Höhenrichtung des Systems erstreckt und das eine Vielzahl von Lagerplätzen aufweist, die eingerichtet sind, Quellpaletten zu lagern; einen ersten Portalroboter mit einer Manipulationseinheit, der eingerichtet ist, die Artikel umzusetzen; eine Packposition, die zur Pufferung einer Zielpalette eingerichtet ist; eine Vielzahl von Förderern; und eine Steuerung, die vorzugsweise eingerichtet ist, für jeden der Aufträge ein auftragsspezifisches Packmuster zu bestimmen, um durch den ersten Portalroboter mehrere der Artikel gemäß dem jeweiligen Auftrag von einer oder mehreren der Quellpaletten automatisiert der Packposition zuzuführen; wobei jeder der Förderer eine Aufnahmeposition, die innerhalb des Regals positioniert ist und die zur Aufnahme der Quellpaletten eingerichtet ist, sowie eine Abgabeposition aufweist, die innerhalb eines Aktionsraums des ersten Portalroboters positioniert ist und die zur, vorzugsweise dynamischen, Bereitstellung der Quellpaletten eingerichtet ist; wobei die Steuerung ferner eingerichtet ist zu veranlassen, dass solche der Quellpaletten von den Lagerplätzen über die Aufnahmepositionen zu den Abgabepositionen transportiert werden, die die Artikel enthalten, die zum Packen der Artikel auf die Zielpalette gemäß dem jeweiligen Packmuster benötigt werden; wobei der erste Portalroboter den Aktionsraum definiert, innerhalb welchem die Manipulationseinheit beweglich ist und der zumindest die Abgabeposition der Förderer enthält; und wobei der erste Portalroboter eingerichtet ist, die Artikel, die zum Packen gemäß dem jeweiligen Packmuster benötigt werden, von den Quellpaletten an den Abgabepositionen aufzunehmen und an einen Packpositionszuführförderer abzugeben, der sich durch den Aktionsraum erstreckt und der mit der Packposition hinsichtlich eines Materialflusses verbunden ist, wobei die Packposition innerhalb eines Aktionsraums eines zweiten Portalroboters, der über weitere der Förderer direkt mit dem Regal verbunden ist, positioniert ist oder wobei die Packposition außerhalb der Aktionsräume der Portalroboter positioniert ist.

Der Packpositionszuführförderer sammelt die Artikel, die zum Packen eines auftragsspezifischen Packmusters auf die zugehörige Zielpalette an der Packposition benötigt werden.

Mehrere Portalroboter, die vorzugsweise ausschließlich zum Depalettieren eingesetzt werden, können benachbart zum Packpositionszuführförderer angeordnet werden, um die Anzahl der Quellpaletten zu erhöhen, die gleichzeitig als Entnahmequellen bereitgestellt werden können. Mit dieser Maßnahme kann der Durchsatz (Anzahl fertig gepackter Zielpaletten/Zeiteinheit) erhöht werden, weil die Packposition kontinuierlich mit Artikeln versorgt wird und nicht auf einen Austausch der Quellpaletten gewartet werden muss. Die Packposition muss nicht auf benötigte Artikel warten, weil immer eine ausreichende Anzahl von Quellpaletten zur Depalettierung vorhanden ist. Dies bedeutet mit anderen Worten, dass der Packvorgang von einem Wechsel der Quellpaletten entkoppelt ist.

Der Packpositionszuführförderer kann auch zum Verteilen von Artikeln über mehrere Packpositionen benutzt werden, die nicht (oder nicht nur) innerhalb des Aktionsraums des depalettierenden Portalroboters angeordnet sind. Dies bedeutet, dass der depalettierende Portalroboter nicht nur solche Artikel depalettiert, die für eine Packposition benötigt werden, die innerhalb des Aktionsraums des depalettierenden Portalroboters oder an der entfernt angeordneten Packposition liegen. Der depalettierende Portalroboter versorgt auch andere Packpositionen, die insbesondere in den Aktionsräumen anderer Portalroboter liegen, mit den Artikeln einer Quellpalette, die (ausschließlich) im Aktionsraum des depalettierenden Portalroboters bereitgestellt wird. Dies bedeutet mit anderen Worten, dass die entsprechende Quellpalette nicht über die Förderer und das Regalbediengerät zwischen den Aktionsräumen der Portalroboter hin und her transportiert werden muss, die diese Artikel (ebenfalls) zur Bearbeitung eines Auftrags an ihrer Packposition benötigen, die innerhalb des Aktionsraums des jeweiligen Portalroboters positioniert ist.

Der Portalroboter wird direkt aus dem Regal heraus mit solchen Quellpaletten versorgt, die der Portalroboter zumindest zum Depalettieren benötigt. Die Transportwege sind kurz. Die Transportzeiten sind kurz. Die Kommissionierleistung ist hoch. Die Kommissionierung benötigter Einzelteile (d.h. der Artikel) erfolgt direkt von der Quellpalette herunter. Das System ist vollautomatisiert, so dass auch schwere und unhandliche Artikel kommissioniert werden können.

Die Quellpaletten werden mittels der Förderer durch das Regal "getunnelt". Die Quellpaletten werden auf direktem und kurzem Weg zur Kommissionierzone gebracht.

Der Flächenbedarf ist gering. Auf ein komplex verzweigtes Fördertechnik-Netzwerk zwischen einem Lagerbereich und einem Kommissionierbereich kann verzichtet werden. Die Depalettierung und Palettierung erfolgt am gleichen Ort, d.h. zwischen der Depalettierung und der Palettierung ist ebenfalls kein Fördertechnik-Netzwerk erforderlich.

Auf ein zusätzliches Kommissionierlager, das aus dem Palettenlager mit vereinzelten Artikel gespeist wird, kann verzichtet werden. Dennoch kann ein Piece- bzw. Case-Picking-Konzept angewendet werden, bei dem Paletten die (einzigen) Quellen der Kommissionierung darstellen.

Insbesondere eignet sich das System zur Kommissionierung von Flatpack-Artikeln. Flatpack-Artikel sind flach, groß und schwer und eigenen sich somit nicht für ein Kommissionierkonzept, das mit einem Kommissionierpuffer zwischen dem Palettenlager und der Kommissionierzone arbeitet. Die Kommissionierung der Flatpack-Artikel erfolgt vollautomatisiert, so dass die ergonomischen Herausforderungen entfallen, die durch einen Einsatz von Menschen bei einer manuellen Kommissionierung entstehen können.

Das vorliegende Kommissionierkonzept eignet sich besonders gut für E-Commerce-Anwendungen in den Möbelindustrie. Die Möbelstücke werden in Einzelteilen als "Flatpacks" auf Quellpaletten (sorten-, typen- bzw. artikelrein) bevorratet und gemäß Konzepten kommissioniert, wie sie aus der klassischen Behälterkommissionierung (Ware-zur-Person) bekannt sind. Der E-Commerce zeichnet sich dadurch aus, dass sehr viele Kunden Aufträge platzieren, die jeweils nur wenige Auftragszeilen umfassen. Dies bedeutet, dass das System mit einer sehr großen Anzahl von kleinen (wenige verschiedene Artikel, insbesondere in jeweils kleinen Stückzahlen; d.h. wenige Auftragszeilen pro Auftrag) Bestellungen konfrontiert ist, was eigentlich gegen eine Kommissionierung direkt von einer Quellpalette herunter spricht.

Ferner können Bestandsanlagen durch einfache Maßnahmen um- bzw. nachgerüstet werden. Die Förderer können ohne viel Aufwand in bestehende Regale eingebaut werden, insbesondere in einer untersten Ebene. Anschließend können der oder die Portalroboter direkt seitlich neben dem Regal platziert werden. Die Versorgung der Kommissionierzellen, die durch die Portalroboter definiert werden, mit Zielpaletten kann z.B. durch Unstetigförderer, wie z.B. Verschiebewägen, zwangsgeführte oder autonom fahrbare, fahrerlose Transportfahrzeuge und Ähnliches erfolgen, die die fertigen Zielpaletten dann auch in eine Versandzone transportieren können.

Ein Regal mit mindestens zwei Regalebenen reicht bereits aus, um die Förderer ins Regal integrieren zu können. Dies bedeutet, dass Bestandsanlagen nachrüstbar sind, die relativ niedrige Palettenlager umfassen.

Der materialflusstechnische Knotenpunkt eines jeden Regals, nämlich der Stirnbereich bzw. die Regalgassenenden, wird entlastet, weil der durch die Kommissionierung hervorgerufene Materialfluss durch die Längsseite des Regals hindurch erfolgt, während die Versorgung des Regals mit Nachschub sowie die Entsorgung geleerter Ladungsträger weiterhin - wie klassisch üblich - über die Stirnseite des Regals bzw. über die Regalgassenenden erfolgt.

Vorzugsweise grenzt der Portalroboter im Wesentlichen unmittelbar an eine Längsseite des Regals an.

Die im Wesentlichen abstandslose Anordnung des Portalroboters relativ zum Regal verkürzt die Transportwege und somit die Transportzeiten. Die Kommissionierleistung wird erhöht.

Ferner ist die Ankopplung an die Längsseite von Vorteil, weil dort sehr viele Förderer direkt nebeneinander angeordnet werden können.

Lange Transportwege von einer der Stirnseiten des Regals zu den Kommissionierplätzen, d.h. zu den Portalrobotern, entfallen. Der materialflusstechnische Flaschenhals an den kurzen Stirnseiten des Regals entfällt. Es können pro Zeiteinheit mehr Quellpaletten über die Längsseite als über die Stirnseite des Regals ausgelagert werden, weil mehr Übergabepunkte vorhanden sind.

Insbesondere sind die Förderer lineare Stetigförderer, die bidirektional betreibbar sind, die senkrecht, vorzugsweise horizontal senkrecht, zur Längsrichtung orientiert sind und die die Aufnahmepositionen und die Abgabepositionen an ihren jeweiligen Endabschnitten aufweisen.

Lineare Stetigförderer sind einfach zu steuern. Lineare Stetigförderer kommen ohne Weichen oder Abzweigungen aus. Sie haben eine hohe Transportleistung (Anzahl von Quellpaletten/Zeit).

Die Fähigkeit, die Förderer bidirektional zu betreiben, eröffnet die Möglichkeit, die Quellpaletten auf dem gleichen Weg wieder zurückzulagern.

Die senkrechte Orientierung der Förderer zur Längsrichtung des Systems, entlang der sich auch das Regal erstreckt, erhöht die Dichte bzw. Anzahl der Quellpaletten/Längenabschnitt, die dem Portalroboter angedient werden können. Dies erhöht die Leistung, weil mehr Zielpaletten pro Zeiteinheit kommissioniert werden können. Der Portalroboter muss nicht warten, bis die nächste Quellpalette angedient wird.

Vorzugsweise umfasst das System mindestens einen zweiten Portalroboter, wobei sich der Packpositionszuführförderer durch die, vorzugsweise alle, Aktionsräume der Portalroboter erstreckt.

Das System weist also mehrere potenzielle Depalettierpositionen auf, die hinsichtlich eines Materialflusses alle an den Packpositionszuführförderer gekoppelt sind. Sollten einer oder mehrere der zweiten Portalroboter eine eigene Packposition innerhalb ihres Aktionsraums besitzen, kann der Packpositionszuführförderer die oben beschriebene Verteilfunktion durchführen. Dies resultiert darin, dass die Quellpaletten weniger häufig bewegt werden müssen und kürzere Transportwege zurücklegen. Die Anzahl von Einlagerungen und Auslagerungen der Quellpaletten wird verringert, ohne die Packleistung zu verringern.

Insbesondere ist der Packpositionszuführförderer über mindestens einen Sequenzierungspuffer mit der Packposition verbunden, der außerhalb der Aktionsräume positioniert ist.

Wenn die Packposition außerhalb der Aktionsräume der Portalroboter positioniert ist, kann über den Sequenzierungspuffer eine Entkopplung der Packvorgänge erzielt werden. Dies bedeutet, dass Artikel von Quellpaletten depalettiert werden können, die erst in weiter Zukunft gepackt werden. Diese Artikel werden in dem Sequenzierungspuffer gepuffert, so dass die entsprechenden Quellpaletten nicht erneut zur Depalettierung bereitgestellt werden müssen.

Außerdem ist der Sequenzierungspuffer dazu in der Lage, solche Artikel, die zu einem Auftrag gehören, in einer chaotischen Reihenfolge aufzunehmen, aber in der durch das auftragsspezifische Packmuster vorgegebenen Reihenfolge auszugeben. Der Sequenzierungspuffer ordnet die chaotisch eingelagerten Artikel entsprechend dem auftragsspezifischen Packmuster.

Weiter ist es von Vorteil, wenn jeder der Portalroboter entlang einer Längsseite des Regals angeordnet ist und über mindestens zwei der Förderer mit den Artikeln auf den Quellpaletten versorgt wird, die zum Packen gemäß dem jeweiligen Packmuster benötigt werden.

Die Quellpaletten werden durch das Regal "getunnelt". Die Transportwege sind kurz. Die Transportzeiten sind kurz. Es können viele Quellpaletten pro Zeiteinheit bereitgestellt werden. Die Portalroboter können ohne Unterbrechung zum Depalettieren eingesetzt werden, weil immer mindestens eine Quellpalette zur Depalettierung bereitsteht, während die andere(n) Quellpalette(n) ausgetauscht werden.

Vorzugsweise ist mindestens eine weitere Packposition vorgesehen, die insbesondere innerhalb des Aktionsraums des ersten Portalroboters positioniert ist.

In diesem Fall werden die depalettierten Artikel mit dem Packpositionszuführförderer über die verschiedenen Packpositionen verteilt, wie oben beschrieben.

Insbesondere sind die Abgabepositionen der Förderer als dynamische Bereitstellungsplätze für die Quellpaletten entlang einer ersten Längsseite des Packpositionszuführförderers angeordnet und weitere Abgabepositionen, die hinsichtlich des Materialflusses an das Regal gekoppelt sind, sind als statische Bereitstellungsplätze für die Quellpaletten entlang einer zweiten Längsseite des Packpositionszuführförderers angeordnet, die der ersten Längsseite gegenüberliegen.

Die erste Längsseite des Packpositionszuführförderers entspricht der Seite, wo die Förderer angeordnet sind, die den Aktionsraum mit dem Regal direkt verbinden. Diese Förderer sind bidirektional betreibbar, um vorzugsweise Quellpaletten einer mittleren und/oder geringen Zugriffshäufigkeit (B- und C-Artikel) bereitzustellen. Dies repräsentieren die dynamischen Bereitstellungsplätze. Die statischen Bereitstellungsplätze werden vorzugsweise für Artikel der Zugriffshäufigkeit A benutzt, die sehr häufig in Kommissionieraufträgen auftreten. Die entsprechenden Quellpaletten werden in diesem Fall nicht ins Regal zurückgelagert. Deshalb werden diese Quellpaletten vorzugsweise über eine separate Fördertechnik bereitgestellt, damit sich die Materialflüsse der dynamischen und statischen Bereitstellung nicht durchmischen bzw. kreuzen.

Insbesondere werden fertig gepufferte Zielpaletten in einem Lagerpuffer gepuffert, der auf einer Seite an die Packposition (außerhalb der Aktionsräume) gekoppelt ist und der auf einer anderen Seite vorzugsweise an einen Verkaufsort zur Übergabe an und zur direkten Abholung durch Kunden gekoppelt ist.

Das System kann zum Kommissionieren von Versandaufträgen und Abholaufträgen benutzt werden. Abholaufträge werden direkt vom Kunden vor Ort abgeholt. Versandaufträge werden über eine Spedition an die Kunden verschickt. Die Kundenaufträge müssen schnell kommissioniert werden, insbesondere wenn der Kunde den Auftrag während seines Aufenthalts im Verkaufsraum erteilt. Diese Ausgangsartikelströme sind räumlich voneinander getrennt.

Weiter ist es von Vorteil, wenn das System ferner mindestens ein Regalbediengerät aufweist, das eingerichtet ist, die Quellpaletten automatisiert zwischen Lagerplätzen und den Aufnahmeplätzen auszutauschen, wobei das Regalbediengerät vorzugsweise an eine Längsseite des Regals angrenzt, die von dem Portalroboter abgewandt ist.

Die Regalbediengeräte sind Teil der Vollautomatisierung und ermöglichen ein automatisches Umsetzen der Quellpaletten im Bereich des Regals. Die Aufnahmeplätze liegen wie die Lagerplätze innerhalb des Regals und sind somit für das Regalbediengerät ohne Probleme zu erreichen.

Das Regalbediengerät wird vorzugsweise auf der dem Portalroboter gegenüberliegenden Längsseite des Regals eingesetzt, so dass die Förderer quer durch das Regal hindurchreichen, um die Portalroboter mit den Quellpaletten zu versorgen. Die Regalbediengeräte und die Portalroboter stören sich nicht. Die Regalbediengeräte und die Portalroboter sind räumlich getrennt, aber materialflusstechnisch dennoch - auf kürzestem Weg - direkt miteinander verbunden.

Vorzugsweise weist das System weitere Abgabepositionen auf, die ebenfalls innerhalb des Aktionsraums positioniert sind und die zur statischen Bereitstellung weiterer Quellpaletten eingerichtet sind.

Die statische Bereitstellung von Quellpaletten lässt eine Rücklagerung der Quellpaletten entfallen. Die statische Bereitstellung ist insbesondere für Artikel der Zugriffshäufigkeit A geeignet, weil diese Artikel sehr häufig in Kommissionier-Aufträgen auftreten. Die entsprechenden Quellpaletten leeren sich also schnell, so dass eine Rücklagerung unwirtschaftlich ist. Dynamisch bereitgestellte Quellpaletten gehören eher den Zugriffhäufigkeitskategorien B und C an. Hier kann eine Rücklagerung der entsprechenden Artikel durchaus sinnvoll sein.

Insbesondere sind zumindest einige, und vorzugsweise alle, der weiteren Abgabepositionen an einen Versorgungsförderer gekoppelt, der sich von den Förderern unterscheidet und der vorzugsweise einen Verschiebewagen umfasst.

Der Versorgungsförderer ist materialflusstechnisch an das Regal gekoppelt, vorzugsweise im Stirnbereich des Regals, wo die Regalbediengeräte Quellpaletten abgeben können.

Die materialflusstechnische Anbindung der dynamisch bereitgestellten Quellpaletten und der statisch bereitgestellten Quellpaletten ist getrennt und erfolgt durch unterschiedliche Fördertechniken. Die dynamische Bereitstellung erfolgt vorzugsweise durch Stetigförderer, wohingegen die statische Bereitstellung insbesondere durch Unstetigförderer erfolgen kann.

Vorzugsweise umfasst das System ferner einen Abführförderer, der sich vorzugsweise parallel zur Längsrichtung und mittig durch den Aktionsraum erstreckt.

Der Abführförderer kann eingesetzt werden, um Abfall, wie z.B. Zwischenlagen, aus dem Aktionsraum des Portalroboters zu entfernen, so dass der Portalroboter auf tiefer innerhalb der Quellpalette angeordnete Artikel zugreifen kann, die ansonsten verdeckt wären.

Insbesondere sind die Förderer auf einem Bodenniveau des Systems angeordnet.

Dadurch vereinfacht sich der Aufbau. Bühnenartige Gestelle entfallen. Die Förderer sind für Wartungstechniker gut zugänglich.

Vorzugsweise ist eine Ebene des Regals ausschließlich mit den Förderern versehen, wobei vorzugsweise mehrere der Portalroboter in der Längsrichtung unmittelbar benachbart zueinander angeordnet sind und wobei für jeden der Portalroboter zumindest eine eigene Packstation vorgesehen ist.

Die Packroboter werden nicht überlappend betrieben. Dies vereinfacht die Steuerung der Portalroboter. Die Portalroboter sind unabhängig voneinander betreibbar, insbesondere in dem Fall, wenn jeder Portalroboter die Artikel an seine eigene Packstation abgibt.

Weiter ist es von Vorteil, wenn ein Verhältnis zwischen einer Anzahl der Förderer und eine Anzahl der Lagerplätze entlang der Längsrichtung 1:2 oder 2:3 beträgt.

Vorzugsweise ist der Portalroboter eingerichtet, innerhalb des Aktionsraums die Quellpaletten zu depalettieren. Je nach Ausführung können dort auch die Zielpaletten palettiert (d.h. gepackt) werden.

Insbesondere ist jeder der Artikel rechteckig plattenförmig; hat insbesondere Außenmaße in einem Bereich von 620 x 300 x 7 mm³ bis 2550 x 800 x 200 mm³; wiegt vorzugsweise maximal 62 kg; und/oder beinhaltet vorzugsweise geschichtete Einzelteile eines montagefertigen Möbelstücks.

Des Weiteren wird die Aufgabe durch ein Verfahren zum Kommissionieren von Artikeln gemäß Kommissionier-Aufträgen gelöst, wobei das Verfahren die Schritte aufweist: Auslagern von Quellpaletten, die die Artikel speichern, die zum Packen der Artikel gemäß einem auftragsspezifischen Packmuster auf eine Zielpalette benötigt werden, aus Lagerplätzen eines Regals; Abgeben der ausgelagerten Quellpaletten an Aufnahmepositionen von Förderern, deren Aufnahmepositionen innerhalb des Regals angeordnet sind, wobei sich die Förderer, insbesondere linear, vom Regal bis zu einem ersten Portalroboter erstrecken, der entlang einer Längsseite des Regals, vorzugsweise unmittelbar, seitlich angrenzend an das Regal angeordnet ist; Transportieren, mit den Förderern, der abgegebenen Quellpaletten von den Aufnahmepositionen zu Abgabepositionen der Förderer, die innerhalb eines Aktionsraums des ersten Portalroboters positioniert sind; Umsetzen der Artikel, die zum Packen gemäß dem auftragsspezifischen Packmuster auf die Zielpalette benötigt werden, mit einer Manipulationseinheit des ersten Portalroboters, von den Quellpaletten auf einen Packpositionszuführförderer, der sich durch den Aktionsraum des ersten Portalroboters erstreckt und der hinsichtlich eines Materialflusses mit einer Packposition verbunden ist; Transportieren der umgesetzten Artikel mit dem Packpositionszuführförderer zu der Packposition, die innerhalb eines Aktionsraums eines zweiten Portalroboters, der über weitere der Förderer direkt mit dem Regal verbunden ist, positioniert ist oder die außerhalb der Aktionsräume der Portalroboter positioniert ist; und Packen der umgesetzten und transportierten Artikel, vorzugsweise mit einem Portalroboter oder einem Knickarmroboter, auf die Zielpalette, die an der Packposition positioniert ist.

Mit diesem Verfahren werden die gleichen Vorteile erzielt, die bereits oben im Zusammenhang mit dem System erläutert wurden.

Insbesondere werden die Artikel in einer ungeordneten Reihenfolge umgesetzt und in einem Sequenzierungspuffer gepuffert, der eingerichtet ist, die Artikel in einer durch das auftragsspezifische Packmuster vorgegebenen Reihenfolge auszugeben.

Vorzugsweise sind mehrere Packpositionen innerhalb von Aktionsräumen von mehreren Packrobotern vorgesehen und die Kommissionierung erfolgt zweistufig, indem die Aufträge vorab nach Artikeltypen analysiert und kopiert werden, indem die Artikel von mehreren Aufträgen in einer ersten Kommissionierstufe von dem ersten Portalroboter auf den Packpositionszuführförderer umgesetzt werden und indem die Artikel in einer zweiten Kommissionierstufe mit dem Packpositionszuführförderer auftragsspezifisch über die Packpositionen verteilt werden.

Der Packpositionszuführförderer implementiert somit die Verteilung der depalettierten Artikel auf die Zielstellen (Zielpaletten).

Insbesondere werden fertig gepackte Zielpaletten in einem Lagerpuffer gepuffert, der auf einer Seite an die Packstation gekoppelt ist und der vorzugsweise auf einer anderen Seite an einen Verkaufsraum zur Übergabe an und zur direkten Abholung durch Kunden gekoppelt ist.

Vorzugsweise werden die Quellpaletten gemäß dem jeweiligen Packmuster sequenziert depalettiert.

Insbesondere weist das Verfahren ferner auf: Bestimmen, mittels einer Steuerung oder eines Computers, das Packmuster für jeden Auftrag einschließlich der Quellpaletten, die solche der Artikel speichern, die zum Packen gemäß dem Packmuster auf die Zielpalette benötigt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: zeigt eine perspektivische Ansicht eines Kommissioniersystems;
- Fig. 2: zeigt eine perspektivische Ansicht (Fig. 2A) eines Portalroboters und ein Blockdiagramm (Fig. 2B) des Portalroboters;
- Fig. 3: zeigt eine Detailansicht einer Wareneingangszone des Kommissioniersystems der Fig. 1;
- Fig. 4: zeigt weitere Detailansichten des Kommissioniersystems der Fig. 1;
- Fig. 5: zeigt eine schematische Draufsicht auf ein weiteres Kommissioniersystem;
- Fig. 6: zeigt eine Benutzerschnittstelle einer Planungssoftware (Fig. 6A) und eine fertig gepackt Zielpalette wie geplant (Fig. 6B, links) und wie tatsächlich gepackt (Fig. 6B, rechts);
- Fig. 7: zeigt ein Flussdiagramm eines Kommissionierverfahrens;
- Fig. 8: zeigt ein Blockdiagramm eines weiteren Kommissioniersystems; und
- Fig. 9: zeigt ein Flussdiagramm eines weiteren Kommissionierverfahrens.

Das hier vorgeschlagene System 10 kommt allgemein in einem intralogistischen Lager- und/oder Kommissionierumfeld, wie z.B. in einem Distributionszentrum, Versandzentrum oder in einer Filiale eines Einzelhändlers, insbesondere eines Möbelhändlers, zum Einsatz.

Die Intralogistik umfasst logistische Material- und Warenflüsse innerhalb eines Betriebsgeländes, insbesondere innerhalb eines Betriebsgebäudes. Der Begriff Intralogistik wurde definiert, um eine Abgrenzung zum Warentransport außerhalb des Betriebs zu schaffen, der z.B. durch eine Spedition erfolgt. Das "Forum Intralogistik" im "Verband Deutscher Maschinen- und Anlagenbauer" definiert den Begriff "Intralogistik" als die Organisation, Steuerung, Durchführung und Optimierung des innerbetrieblichen Waren- und Materialflusses, der Informationsströme sowie des Warenumschlags in Industrie, Handel oder öffentlichen Einrichtungen.

Unter dem Begriff "Kommissionierung" versteht man das Zusammenstellen einer kundenspezifischen Bedarfsmenge aus einem Sortiment aus mehreren Artikeltypen. Die Kommissionierung beschreibt also eine Kommissionszusammenstellung für einen Kundenauftrag (kurz "Auftrag"), d.h. eine Entnahme von Teilmengen größerer Einheiten einzelner Artikel und deren Zusammenführung und Bereitstellung für einen Versand, oder eine Übergabe innerhalb einer Filiale, an den Kunden.

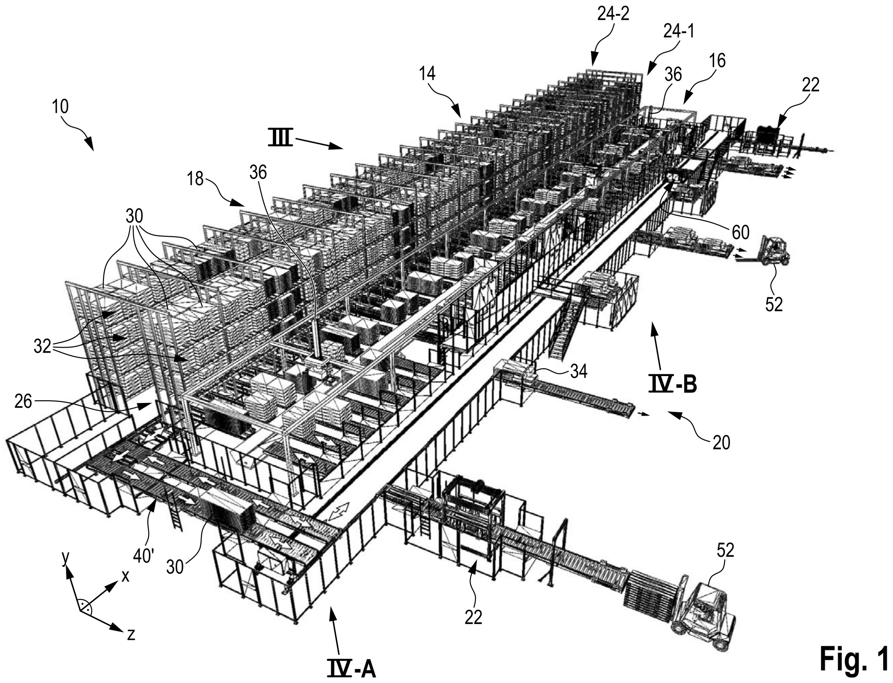

Fig. 1 zeigt eine perspektivische Ansicht einer ersten Ausführungsform eines Kommissioniersystems 10 für (hier nicht dargestellte Einzel-) Artikel 12, die gemäß Kunden- bzw. Kommissionieraufträgen aus einem Sortiment zu vereinzeln und ausgabe- oder versandfertig zu machen sind. Die Artikel 12 weisen im Wesentlichen die Form eines rechtwinkligen Parallelepipeds auf.

Die vorliegende Entwicklung ist insbesondere mit Flatpack-Artikeln verwendbar, die eine spezielle Variante der oben erwähnten quaderförmigen Artikel 12 darstellen. Der Begriff "Flatpack" bezeichnet ein plattenartiges Paket, das üblicherweise eine Vielzahl von (flachen) montagefertigen Einzelteilen enthält, die später durch einen Endkunden nach einem Auspacken zu einem komplexen Objekt, wie z.B. einem Schrank, zusammengebaut werden können. Flatpack-Artikel zeichnen sich dadurch aus, dass eine Länge und eine Breite des Pakets um ein Vielfaches größer als eine Höhe des Pakets sind. Flatpack-Artikel kommen insbesondere in der Möbelindustrie zum Einsatz. Flatpack-Artikel sind in der Regel schwer und stellen hinsichtlich deren Handhabung besondere ergonomische Anforderungen.

Im Nachfolgenden wird die vorliegende Entwicklung allgemein anhand von Artikeln 12 beschrieben, die in der Intralogistik als SKU ("stock keeping unit") oder VPE (Verpackungseinheiten) bezeichnet werden.

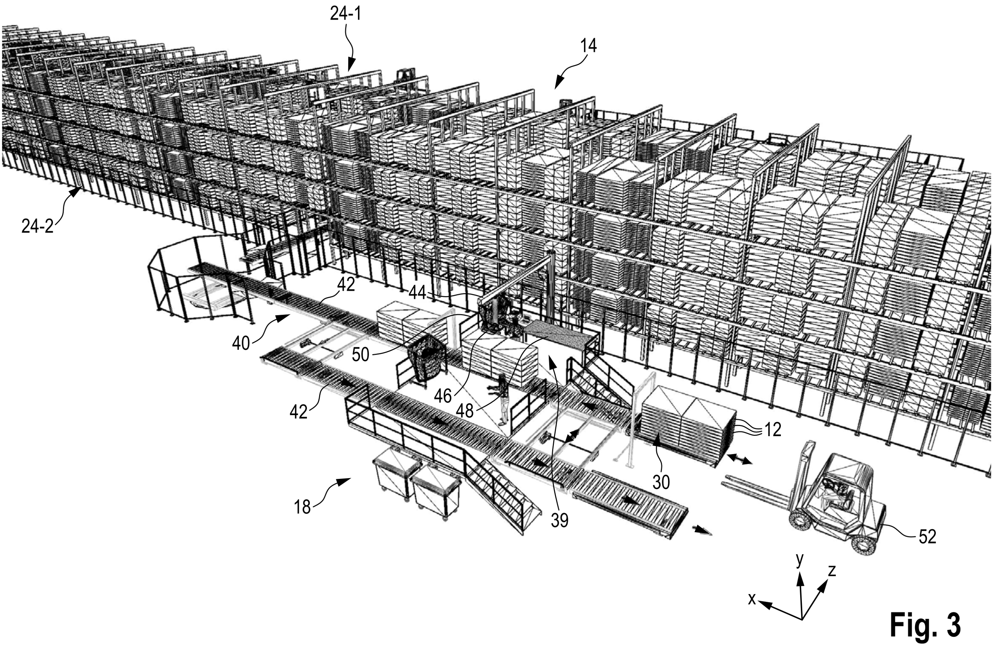

Das Kommissioniersystem 10, das nachfolgend auch nur kurz als "System 10" bezeichnet werden wird, umfasst eine Lagerzone 14 und eine Kommissionierzone 16. Ferner kann das System 10 eine Wareneingangszone 18 (in Fig. 1 verdeckt, weil hinter der Lagerzone 14 positioniert, siehe auch Fig. 3), eine Versandzone 20 sowie ein oder mehrere Puffer 22 für leere Zielpaletten 34 (nicht dargestellt) aufweisen.

Die Lagerzone 14 erstreckt sich im Wesentlichen parallel zu einer Längsrichtung X des Systems 10. Die Lagerzone 14 der Fig. 1 weist mindestens ein Regal 24, hier exemplarisch zwei Regale 24-1 und 24-2, auf, die parallel zur Längsrichtung X ausgerichtet sind und die eine Regalgasse 26 zwischen sich definieren, wo ein oder mehrere (hier nicht gezeigte) Regalbediengeräte (RBG) 28 zur automatisierten Ein- und Auslagerung von, vorzugsweise typenrein beladenen, Quellpaletten 30 betrieben werden. Die Lagerzone 14 der Fig. 1 wird z.B. mit zwei RBG 28 betrieben, die innerhalb der gleichen Regalgasse 26 simultan betrieben werden. Die Lagerzone 14 ist vorzugsweise durch eine Grundfläche der Regale 24 und der Regalgasse 26 definiert. Unter dem Begriff "Quellpalette 30" ist nachfolgend die Einheit aus den gelagerten Artikel 12 und dem Ladungsträger zu verstehen.

Allgemein sind Paletten Ladehilfsmittel bzw. Ladungsträger, die in unterschiedlichen Abmessungen existieren (Europalette, Düsseldorfer Palette, etc.) und die zur Bündelung, Lagerung und für den Transport größerer Mengen der Artikel 12 dienen. Paletten können aus unterschiedlichen Materialen (Karton, Holz, Metall, etc.) hergestellt werden. In der Möbelindustrie kommen oft auch besonders lange Paletten bzw. Langpaletten (2000 x 800 x 144 mm3) zum Einsatz.

Die Quellpaletten 30 können - je nach Abmessung - einfach tief oder mehrfach tief (in der Querrichtung Z) in Lagerplätzen 32 der Regale 24 gelagert werden. Vorzugsweise werden Europaletten benutzt. Jeder Lagerplatz 32 stellt ein Regalfach dar, das zur Aufnahme einer Palette eingerichtet ist. In einer einfachen Ausführung werden die Regalfächer durch die Längsträger, Querträger und/oder Regalsteher des Regals 24 definiert. Die Regalfächer können zur Aufnahme unterschiedlicher Palettentypen eingerichtet sein. Dies bedeutet, dass in dem Regal 24 Quellpaletten 30 mit unterschiedlichen Ladungsträgern gleichzeitig lagerbar sind.

In Fig. 1 umfasst jedes der Regale 24-1 und 24-2 exemplarisch vier Lagerebenen, die vertikal, d.h. in der Höhenrichtung Y, übereinander angeordnet sind. Die Lagerplätze 32 sind in der Längsrichtung X kontinuierlich nebeneinander und in der Höhenrichtung Y kontinuierlich übereinander angeordnet. Jedes Regal 24 weist mindestens zwei Ebenen auf, d.h. mindestens eine Ebene für die Lagerung der Quellpaletten 30 (Lagerebene) und mindestens eine vertikal beabstandete Fördertechnik-Ebene zur direkten Versorgung der Kommissionierzone 16 mit den Quellpaletten 30 auf einem kürzesten Weg. Die Lagerebenen weisen ausschließlich Lagerplätze 32 auf. Die Fördertechnik-Ebene weist vorzugsweise ausschließlich Fördertechnik - und somit keine Lagerplätze 32 zumindest entlang bzw. parallel der Kommissionierzone 16 - auf.

Es versteht sich, dass ein einziges Regal 24 ausreichen kann, um die Lagerzone 14 zu implementieren. In die Fig. 1 wäre dies das Regal 24-1, das unmittelbar an die Kommissionierzone 16 angrenzt. Die Lagerzone 14 kann ferner auch mehr als zwei Regale 24 aufweisen.

Die Kommissionierzone 16 wird im Wesentlichen durch einen oder mehrere Portalroboter 36 definiert. Eine Grundfläche der Kommissionierzone 16 entspricht im Wesentlichen einer Grundfläche des bzw. der Portalroboter 36. Die Fördertechnik-Ebene ist vorzugsweise mindestens genau so lang wie die Kommissionierzone 16. Dies bedeutet mit anderen Worten, dass sich weitere Regale bzw. Regalabschnitte (nicht gezeigt) in der Längsrichtung X an das Regal 24-1 anschließen könnten, die ohne eine Fördertechnik-Ebene auskommen, insbesondere in der positiven X-Richtung.

Ferner versteht es sich, dass ein oder mehrere weitere Kommissionierzonen 16 (nicht gezeigt) vorgesehen werden können. Insbesondere kann sich eine weitere Kommissionierzone 16 (nicht gezeigt), z.B. spiegelsymmetrisch, an das Regal 24-2 anschließen. Diese weitere Kommissionierzone könnte für Aufträge reserviert sein, die direkt von den Kunden abgeholt werden, während die Kommissionierzone 16 am Regal 24-1 für den Versand reserviert ist (oder umgekehrt). Die weitere Kommissionierzone 16 am Regal 24-2 wäre nicht so lang wie die am Regal 24-1, weil die untere Regalebene des Regals 24-2 mit einem Versorgungsförderer belegt ist, der das zweite RBG 28 mit Quellpaletten (Nachschub) versorgt.

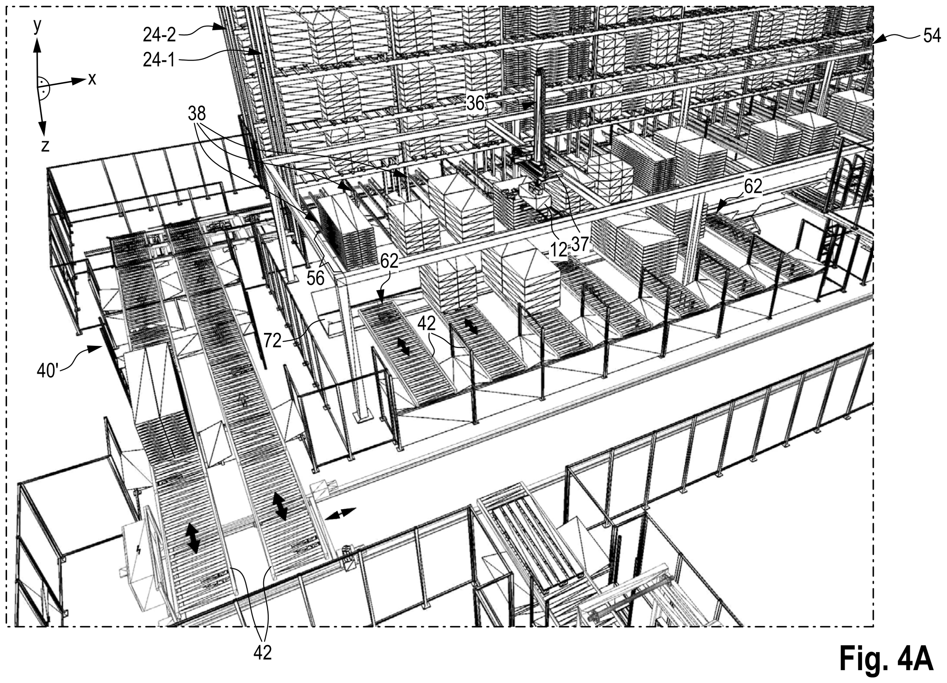

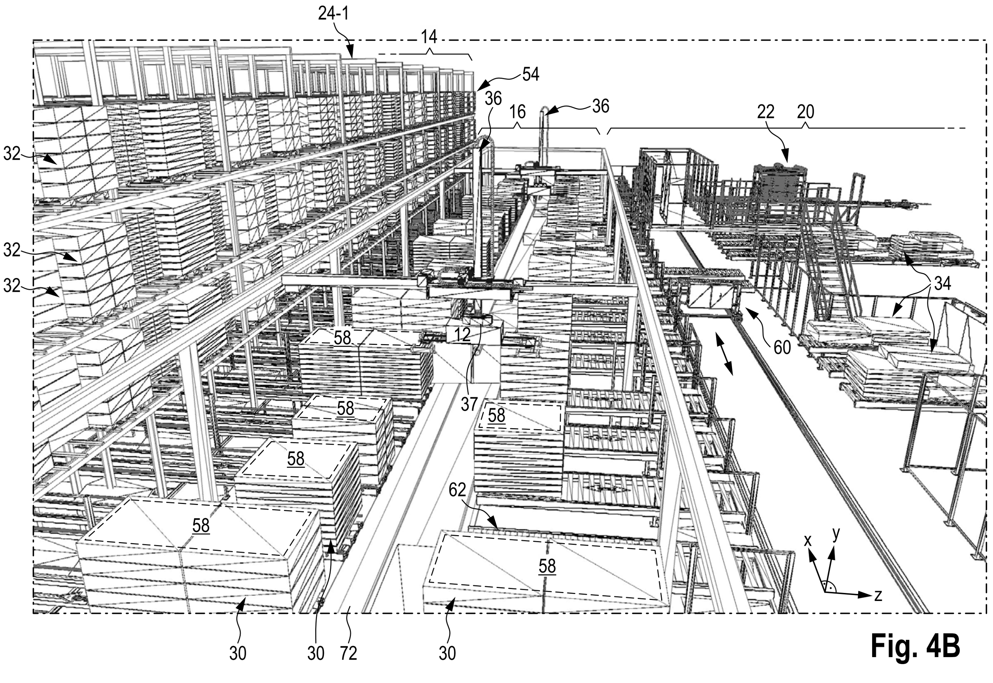

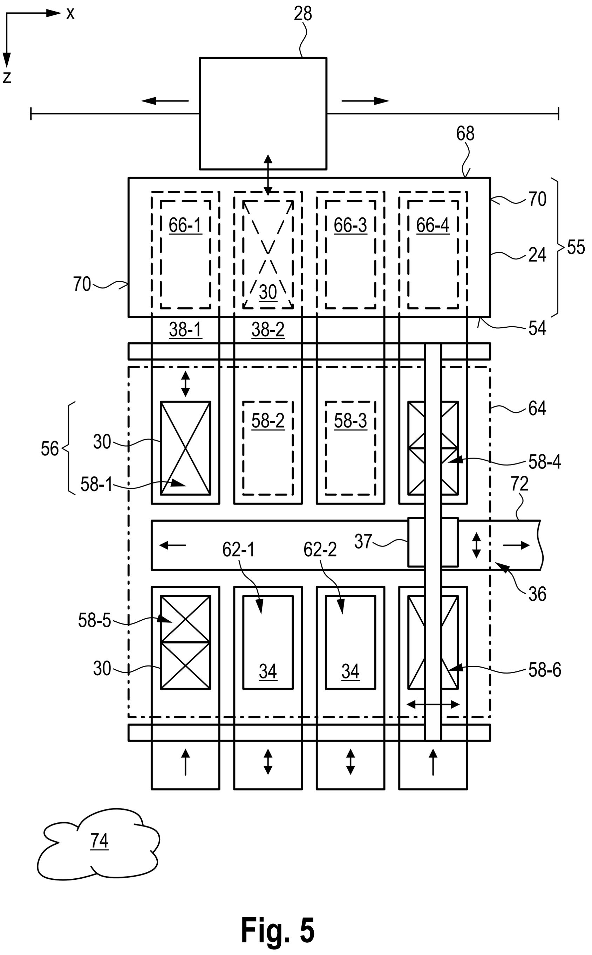

In der Kommissionierzone 16 werden die Quellpaletten 30 (automatisiert) mittels Förderern 38 (vgl. auch Fig. 4 und 5) bereitgestellt, um solche der Artikel 12 zu depalettieren, die zur Erzeugung eines Artikelstapels auf einer (hier nicht näher gezeigten) Zielpalette 34 gemäß einem Packmuster (und somit gemäß des zugehörigen Auftrags) benötigt werden. Die Zielpalette 34 umfasst einen Ladungsträger (Palette) und die auftragsspezifisch benötigten Artikel 12. Im Nachfolgenden wird nicht genauer zwischen dem Ladungsträger allein oder der Kombination aus Ladungsträger und Artikeln 12 unterschieden, weil die Zielpalette 34 zu Beginn eines Kommissioniervorgangs leer ist, also nur durch die Palette implementiert ist, und am Ende die auftragsspezifischen Artikel 12 enthält.

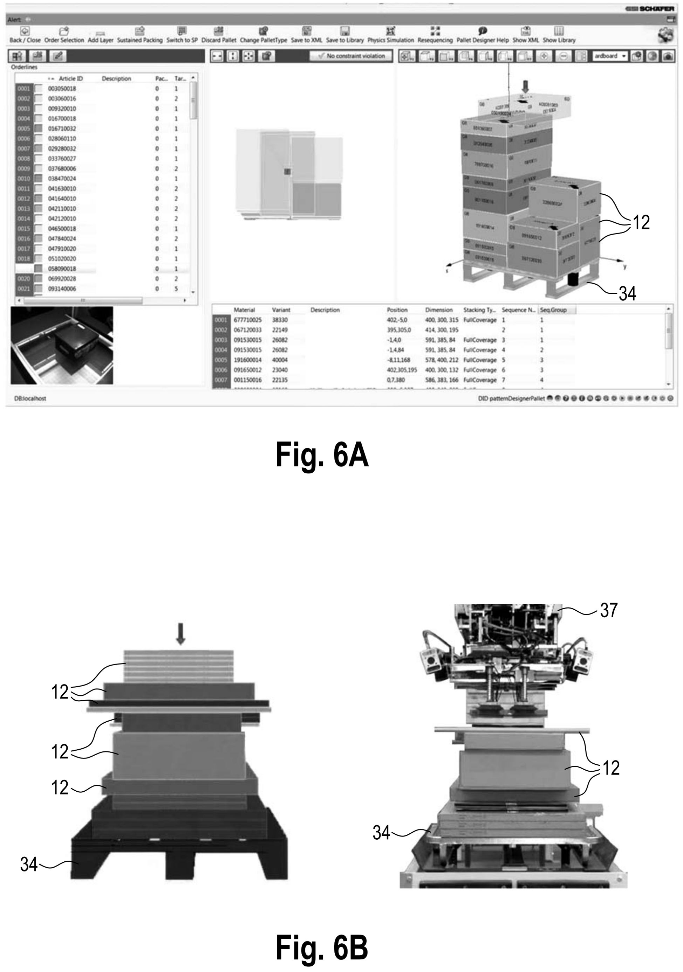

Die Bildung des (Artikel-)Stapels auf der Zielpalette 34 wird durch einen Packmustergenerator (Planungssoftware) in Form des Packmusters bestimmt und vorgegeben, um die Artikel 12 mittels einem der Portalroboter 36 auftragsspezifisch in - möglichst raumoptimierten, stabilen, sich gegenseitig stützenden - Schichten als Stapel auf die zugehörige Zielpalette 34 zu packen. Fig. 6A zeigt einen Ausschnitt einer Benutzerschnittstelle (GUI, "graphical user interface") der Planungssoftware, wobei in der rechten Spalte der Fig. 6A eine perspektivische Ansicht des (geplanten) Artikelstapels auf der Zielpalette 34 visualisiert ist, wobei in der mittleren Spalte der Fig. 6A eine halbtransparente Draufsicht auf den Stapel visualisiert ist und wobei in der linke Spalte der Fig. 6A eine Liste der benötigten Artikeltypen (Artikel-ID) und Stückzahlen (Auftragszeilen) sowie ein Foto eines aktuell bearbeiteten Artikels 12 veranschaulicht sind.

Links in der Fig. 6B ist eine fertig gepackte Zielpalette wie geplant und rechts wie tatsächlich gepackt gezeigt.

Die "Portalroboter 36" sind (Industrie-)Roboter, die an ein portalartiges Gestell (Portalgestell) gekoppelt sind, um ihre Manipulationseinheiten 37 (Endeffektoren) in einem jeweiligen rechtwinkligen Arbeitsraum zu bewegen, der durch drei translatorische (kartesische) Bewegungsachsen (XYZ) des jeweiligen Roboters aufgespannt wird. Im Allgemeinen sind die Roboter universell einsetzbare Bewegungsautomaten mit mehreren translatorischen und/oder rotatorischen Achsen. Die Bewegungen der Roboter sind in Bezug auf Bewegungsfolgen und Bewegungswege frei programmierbar und ggf. sensorgeführt. Die Roboter sind mit den Manipulationseinheiten 37 (vorzugsweise Vakuumhebern, die mittels Vakuum eine Oberseite der Artikel anhaften und die Artikel dann anheben, bewegen und dann wieder absetzen) ausgerüstet und können Handhabungsaufgaben (Umsetzen eines Artikels von Quellpalette 30 auf Zielpalette 34) ausführen.

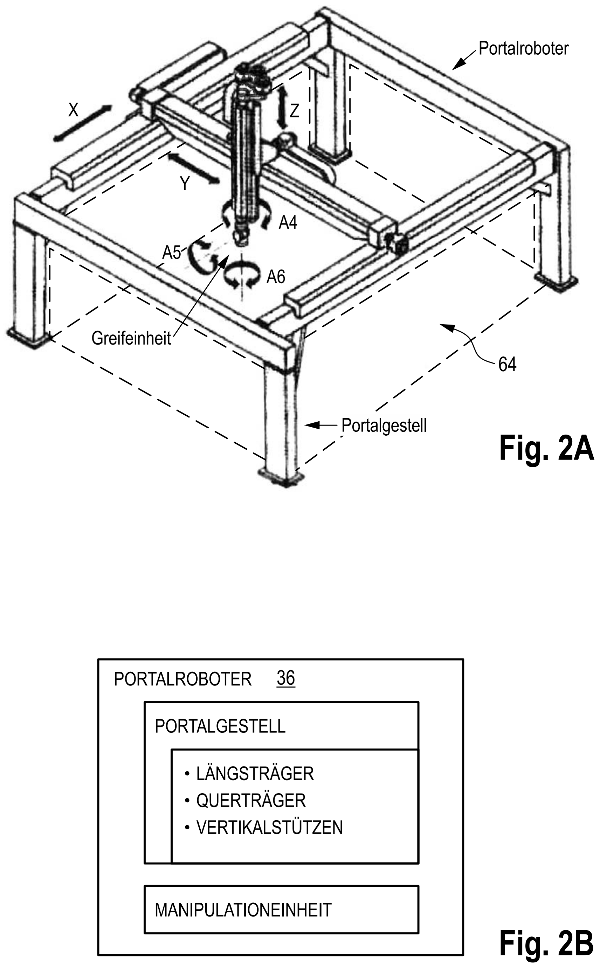

In Fig. 2A ist ein einzelner Portalroboter 36 schematisch veranschaulicht, der ein stationäres (Portal-)Gestell mit z.B. vier stationären Vertikalstützen, zwei stationären Längsträgern und zwei stationären Querträgern aufweist, auf denen ein (in X) beweglicher Querträger gelagert ist, an den ein (in Y) vertikal beweglicher Mast gekoppelt ist. Der Mast ist an einen Schlitten am Querträger gekoppelt. Die drei translatorischen Hauptachsen (A1-A3, nicht gezeigt) sind mit X (Längsrichtung), Z (Querrichtung) und Y (Vertikalrichtung) bezeichnet. Ferner sind in der Fig. 2A drei (optionale) Rotationsachsen A4-A6 für die Greifeinheit bzw. die Manipulationseinheit 37 angedeutet. Die Schlitten für den beweglichen Querträger und den Mast werden typischerweise mit Elektromotoren angetrieben, wobei eine Kraftübertragung z.B. durch Zahnriemen, Zahnstangen oder Spindeln erfolgt. Alternativ können Linearmotor-Direktantriebe, Pneumatikantriebe oder andere Antriebe eingesetzt werden.

Die Fig. 2A zeigt ein Vollportal. Es könnten aber auch Halbportale verwendet werden, die auf nur zwei Vertikalstützen stehen, die ferner (optional) beweglich auf einem Boden gelagert sein könnten. Das Vollportal der Fig. 2A wird auch als Flächenportal bezeichnet, weil eine große horizontale (Grund-)Fläche abgedeckt wird.

Fig. 2B zeigt ein Blockdiagramm des Portalroboters 36.

Der Portalroboter 36 der Fig. 2B weist allgemein das, vorzugsweise stationär angeordnete, Portalgestell und mindestens eine Manipulationseinheit 37 auf. Die Manipulationseinheit 37, die vorzugsweise als Sauggreifer implementiert ist, ist beweglich an das Portalgestell gekoppelt. Die Manipulationseinheit 37 ist automatisiert entlang von mindestens zwei Achsen beweglich. Das Portalgestell überragt die Förderer 38 vertikal (vgl. Fig. 4 und 5), so dass die Artikel 12 mittels der Manipulationseinheit 37 von oben von den Quellpaletten 30, die die (Lager-)Artikel 12 und den palettenartigen Ladungsträger umfassen, aufgenommen und nach unten an die Zielpalette(n) 34 abgegeben werden können.

In der Kommissionierzone 16 werden die Portalroboter 36 also zur Depalettierung bzw. Vereinzelung der Quellpaletten 30 und zur Palettierung bzw. schichtweisen Stapelbildung auf den Zielpaletten 34 eingesetzt, wie es nachfolgend noch näher erläutert werden wird.

Die Quellpaletten 30 sind vorzugsweise typenrein beladen, d.h. auf den Quellpaletten 30 ist immer nur ein einziger Artikeltyp - in einer beliebigen Stückzahl von eins oder mehr - gelagert.

In der Wareneingangszone 18 der Fig. 1, die in Fig. 3 detailliert veranschaulicht ist, werden dem System 10, und insbesondere der Lagerzone 14, (Wareneingangs-)Artikel 12 als Nachschub von außen zugeführt und für eine Einlagerung in die Regale 24 überprüft und vorbereitet (Transportsicherung entfernen, Identifikation und Zählung der Artikel 12, Qualitätsprüfung, etc.). In der Fig. 3 blickt man von hinten auf die Regale 24 der Lagerzone 14 der Fig. 1 (vgl. Pfeil III in Fig. 1).

Die Wareneingangszone 18 kann ein oder mehrere sog. Teach-in-Stationen 39 umfassen, wo z.B. (Außen-) Abmessungen von eingehenden Quellpaletten 30 und den zugehörigen einzelnen Artikeln 12, Identifizierungscodes der Quellpaletten 30 und der darauf gelagerten Artikel 12, eine Stückzahl der Artikel 12 und dergleichen, vorzugsweise automatisiert, erfasst werden.

Die Wareneingangszone 18 ist allgemein über eine Fördertechnik 40, vorzugsweise Stetigförderer (wie z.B. Kettenförderer, Rollenförderer 42, Bandförderer, Elektrohängebahn, Elektrobodenbahn, etc.) an die Lagerzone 14 gekoppelt. In der Fig. 3 tritt die Fördertechnik 40 exemplarisch in einem mittleren Bereich der Lagerzone 14 von hinten in das hintere Regal 24-2 ein, um von beiden (nicht dargestellten) RBG 28 gleich schnell erreichbar zu sein, die die Einlagerung der Wareneingangs-Quellpaletten in die Regale 24 vornehmen.

Alternativ oder ergänzend könnte sich die Fördertechnik 40 bis zu einer oder beiden Stirnseiten der Regale 24 und/oder parallel zur X-Richtung zumindest teilweise innerhalb einem der oder innerhalb beider Regalen 24 erstrecken, um die RBG 28 mit neuen, beladenen Quellpaletten 30 zu versorgen und um alte, leere Paletten zu entsorgen (vgl. Pfeile, die eine Förderrichtung in Fig. 3 veranschaulichen).

Die Teach-in-Station 39 kann ferner optional einen Schwenkarm 44 mit einem Vakuumheber 46, einen Rollentisch 48 zur Ablage und manuellen Prüfung vereinzelter Artikel 12, eine Waage, einen Lichtvorhang 50 und/oder Ähnliches aufweisen, um für jede Wareneingangs-Palette die erforderlichen Daten zu ermitteln, um die Wareneingangs-Palette als Quellpalette 30 zu qualifizieren und zu behandeln.

In der Fig. 1 werden in der Versandzone 20 werden fertig geschichtete bzw. gepackte Zielpaletten 34, d.h. Zielpaletten 34, die alle gemäß einem Auftrag vorgegebenen Artikel 12 in dem durch das entsprechende Packmuster vorgegeben Stapel enthalten, für einen Versand vorbereitet, indem z.B. die auf die Zielpalette 34 geschichteten Flatpack-Artikel 12 mit einer Folie (umfänglich) für eine Transportsicherung umwickelt werden, Versanddaten aufgeklebt werden und Ähnliches (nicht gezeigt). In der Versandzone 20 können fertige Zielpaletten 34 auch gepuffert werden, bis diese das System 10 final verlassen.

Alternativ oder ergänzend können fertige Zielpaletten 34 auch zur direkten Übergabe an einen Endkunden vorbereitet werden, z.B. wenn das System 10 direkt an eine Verkaufsstätte (Filiale) angeschlossen ist, wo die Endkunden Verkaufsgegenstände in einem montierten Zustand in einem separat vorgesehenen Showroom besichtigen und dann als Flatpacks bestellen und mitnehmen können, um die Objekte zuhause selbst zu montieren.

In der Fig. 1 dienen die Zielpaletten-Puffer 22 einem Nachschub von leeren Zielpaletten 34, die vorzugsweise mittels Unstetigförderern (z.B. bemannten Gabelstaplern 52, fahrerlosen Transportfahrzeugen und dergleichen) in oder an die Kommissionierzone 16 transportiert werden, um dort von dem oder den Portalrobotern 36 gemäß den auftragsspezifischen Packmustern mit den zugehörigen Artikeln 12 beladen zu werden.

Fig. 4 zeigt perspektivische Detailansichten (Fig. 4A und 4B) des Systems 10 der Fig. 1 entlang der Pfeile IV-A und IV-B in der Fig. 1. Die Fig. 4 zeigt insbesondere einen Blick in die Kommissionierzone 16, wo die Portalroboter 36 in der Längsrichtung X (direkt) hintereinander und parallel zu einer äußeren Längsseite 54 des ersten Regals 24-1 (vgl. Fig. 1) angeordnet sind. Die Portalroboter 36 und die Kommissionierzone 16 grenzen in der Querrichtung Z direkt an die Lagerzone 14 an. Die Portalroboter 36 grenzen in der Querrichtung Z im Wesentlichen unmittelbar, d.h. direkt, an das Regal 24-1 an und sind hinsichtlich eines Materialflusses (Quellpaletten 30) über die Förderer 38 direkt mit der Lagerzone 14, insbesondere mit dem ersten Regal 24-1, verbunden.

In der Fig. 4 sind eine Vielzahl von Förderern 38 gezeigt, die insbesondere voneinander getrennt vorgesehen sind und die exemplarisch als Kettenförderer implementiert sind. Die Förderer 38 sind vorzugsweise lineare Stetigförderer, die insbesondere parallel und (minimal) beabstandet zueinander angeordnet sind und die sich im Wesentlichen in der Querrichtung Z erstrecken. Die Förderer 38 sind eingerichtet, die Quellpaletten 30 aus dem Bereich des Regals 24-1 auf einem kürzesten Weg in die Kommissionierzone 16, d.h. in die Aktionsräume der Portalroboter 36, (automatisiert) zu transportieren.

Die Förderer 38 sind vorzugsweise in der untersten Ebene des Regals 24-1 angeordnet. Die unterste Ebene des Regals 24-1 ist vorzugsweise ausschließlich mit den Förderern 38 versehen, zumindest entlang der Kommissionierzone 16, d.h. entlang den Portalrobotern 36. Dies bedeutet ferner, dass auf der untersten Ebene des Regals 24-1 entlang dieses Regalabschnitts keine Lagerplätze 32 vorgesehen sind. Diese Fördertechnikebene stellt eine Transferebene bzw. -zone zwischen der Lagerzone 14 und der Kommissionierzone 16 dar.

Es versteht sich, dass diese Transferzone auch in einer mittleren oder höchsten Ebene des Regals 24 vorgesehen werden kann. Die Ausführungsform der Fig. 4 veranschaulicht eine bodenbasierte Ausführung, bei der die Kommissionierung und der Versand auf dem (Gebäude-) Boden stattfindet. Es versteht sich, dass die Kommissionierung und/oder der Versand auch auf einem anderen Stockwerk des (nicht veranschaulichten) Gebäudes stattfinden kann, in welches das System 10 eingebaut ist. Das Regal 24 erstreckt sich dabei über mehrere Stockwerke und wird über die Förderer 38 horizontal an die Kommissionierzone 16 gekoppelt.

Des Weiteren ist in der Fig. 4 veranschaulicht, dass - in der Längsrichtung X betrachtet - zwei Förderer 38 pro drei Lagerplätzen 32 vorgesehen sind. Dies bedeutet mit anderen Worten, dass anstatt von zwei direkt benachbarten Förderern 38 drei direkt benachbarte Lagerplätze 32 innerhalb des Regals 24 (zwischen zwei benachbarten vertikal Regalstehern) vorgesehen werden könnten. Alternativ könnte ein Verhältnis von 2:1 für das Verhältnis von Lagerplätzen 32 zu Förderern 38 gewählt werden.

Da die Förderer 38 die Portalroboter 36 mit Quellpaletten 30 versorgen, die für eine auftragsspezifische Kommissionierung benötigt werden, ist es bevorzugt, möglichst viele Förderer 38 pro Längsabschnitt des Regals 24 vorzusehen. Die Anzahl der Förderer 38 ist ein Maß für den Durchsatz, d.h. für die Fähigkeit, unterschiedliche Artikel 12 (gemäß den Kommissionieraufträgen) schnell zu den Portalrobotern 36 zu liefern.

Die Quellpaletten 30, die in der linken Hälfte der Aktionsräume der Portalroboter 36 der Fig. 4 positioniert sind, stehen auf Endabschnitten 56 der Förderer 38, die sog. Abgabepositionen 58 (vgl. Fig. 4B) für die Artikel 12 innerhalb der Aktionsräume der Portalroboter 36 definieren. Die in der Fig. 4B unten links dargestellte Quellpalette 30 enthält z.B. zehn Flatpack-Artikel 12, die in zwei Stapeln zu jeweils fünf Stück übereinander geschichtet sind.

Die Quellpaletten 30 stellen generell die Entnahmequellen für die Kommissionierung dar. Die Zielpaletten 34 an den Packpositionen 62 stellen generell die Abgabeziele für die Kommissionierung dar.

Bei den in der Fig. 4B in der linken Hälfte der Aktionsräume der Portalroboter 36 dargestellten Abgabepositionen 58 handelt es sich vorzugsweise um "dynamische" Abgabepositionen. Die dynamischen Abgabepositionen 58 zeichnen sich dadurch aus, dass die Quellpaletten 30 von den Förderern 38 bidirektional bewegt werden können. Dies bedeutet, dass die Quellpaletten 30 zur Entnahme, d.h. Depalettierung durch die Portalroboter 36, in die Abgabepositionen 58 bewegt werden, um anschließend - nach der Entnahme der benötigten Artikel 12 - wieder in die Lagerzone 14 bzw. in das Regal 24 zurückbewegt zu werden.

"Statische" Abgabepositionen 58 zeichnen sich dadurch aus, dass alle Artikel 12 verbraucht werden, bevor der Ladungsträger der zugehörigen Quellpalette 30 entsorgt wird. In der Fig. 4B sind exemplarisch alle Abgabepositionen 58, die in der Längsrichtung X benachbart zu den Packpositionen 62 angeordnet sind und die sich in der rechten Hälfte der Aktionsräume der Portalroboter 36 befinden, als "stationäre" Abgabepositionen implementiert. Die Packpositionen 62 werden z.B. durch Endabschnitte von z.B. Rollenförderern 42 (vgl. Fig. 4A) gebildet, die die Kommissionierzone 14 mit der Versandzone 20 verbinden. Es versteht sich, dass die Packpositionen 62, die zur Bereitstellung der Zielpaletten 34 eingerichtet sind, auch durch Unstetigförderer, wie z.B. die Gabelstapler 52, mit den Zielpaletten 34 versorgt werden können. Die Zielpaletten 34 könnten z.B. auch direkt auf dem Hallenboden abgestellt werden, um die Packpositionen 62 zu definieren.

Die Versorgung der stationären Abgabepositionen 58 mit den Quellpaletten 30 (des Zugriffhäufigkeitstyps A) kann z.B. über einen Verschiebewagen 60 erfolgen, der in der Längsrichtung X schienengeführt verfahrbar ist, um die Quellpaletten 30 dann in der Querrichtung Z abzugeben. Der Verschiebewagen 60 ist ebenfalls ein Unstetigförderer, der über eine weitere Fördertechnik 40' an die (Wareneingangs-) Fördertechnik 40 (vgl. Fig. 3) und/oder im Bereich der Stirnseite der Regale 24 an die RBG 28 gekoppelt sein kann, um die Quellpaletten 30 aus der Lagerzone 14 zu den statischen Abgabepositionen 58 zu transportieren. Vollständig geleerte Quellpaletten 30, d.h. deren Ladungsträger, können mit dem Verschiebewagen 60 entsorgt und durch neue Quellpaletten 30 ersetzt werden.

Die materialflusstechnische Anbindung der stationären Abgabepositionen 58 bzw. solcher Positionen 58, die nicht durch die Förderer 38 realisiert werden, erfolgt vorzugsweise durch - oder unter Einbeziehung von bereits vorhandener - Fördersysteme, wie z.B. der Fördertechnik 40 aus der Wareneinganszone18 oder auch der Gabelstapler 52. Es versteht sich, dass weitere (nicht gezeigte) Fördertechniken (z.B. fahrerlose Transportfahrzeuge, Hängeförderer, etc.) eingesetzt werden könnten.

Der Verschiebewagen 60 kann ferner benutzt werden, um leere Zielpaletten 34 - über z.B. die Rollenförderer 42 - in die Aktionsräume der Portalroboter 36 zu transportieren. Die leeren Zielpaletten 34 werden in diesem Fall in einer Packposition 62 innerhalb der Aktionsräume der Portalroboter 36 positioniert. In der Fig. 4B sind die Packpositionen 62 in der rechten Hälfte des Aktionsraums gezeigt.

Die Versorgung der (dynamischen) Abgabepositionen 58 mit Quellpaletten 30 erfolgt direkt und auf kürzestem Wege aus der Lagerzone 14. Die Versorgung ist vorzugsweise vollständig automatisiert unter Einbindung des oder der RBG 28, die entlang einer Längsseite des Regals 24-1 betrieben werden, die von der Kommissionierzone 16 abgewandt ist. Diese Längsseite (68 in Fig. 5) liegt der in Fig. 4 gezeigten Längsseite 54 in der Z-Richtung gegenüber.

Der Verschiebewagen 60 stellt eine exemplarische Implementierung der fördertechnischen Anbindung der rechten Hälfte der Aktionsräume dar, die auch durch andere Förderertypen (Stetigförderer oder Unstetigförderer) erfolgen könnte, wie oben erwähnt.

Fig. 5 zeigt eine Draufsicht auf eine schematische dargestellte zweite Ausführungsform des Systems 10, das sich nur unwesentlich von dem System 10 der Fig. 1-4 unterscheidet.

Das System 10 der Fig. 5 umfasst exemplarisch ein (einziges) Regal 24 zur Pufferung der Quellpaletten 30 in mehreren Ebenen und exemplarisch einen (einzigen) Portalroboter 36 sowie exemplarisch vier Förderer 38, die das Regal 24 materialflusstechnisch mit dem Aktionsraum des Portalroboters 36 verbindet, dessen Grundfläche in der Fig. 5 durch eine strichpunktierte Linie 64 umrandet ist. Es könnten auch mehr oder weniger Förderer 38 vorgesehen werden.

Die Förderer 38 beginnen wieder im Regal 24 und enden wieder im Aktionsraum des Portalroboters 36. Erste Endabschnitte 55 der Förderer 38, die innerhalb des Regals 24 liegen, definieren die Aufnahmepositionen 66 und die zweiten, gegenüberliegenden Endabschnitte 56 der Förderer definieren wieder die Abgabepositionen 58. Die Förderer 38 werden wieder vorzugsweise bidirektional betrieben. Somit sind jeweils vier Aufnahmepositionen 66-1 bis 66-4 und vier Abgabepositionen 58-1 bis 58-4 gezeigt, die den vier Förderern 38-1 bis 38-4 zugeordnet sind.

An den Aufnahmepositionen 66 werden die Quellpaletten 30 aufgenommen, die aus den Lagerplätzen 32 (nicht gezeigt) des Regals 24 stammen. Die Quellpaletten 30 werden aus der dem Portalroboter 24 abgewandten Längsseite 68 des Regals 24 ausgelagert und in die Aufnahmeplätze 66 hinein bewegt. Die Auslagerung aus den Lagerplätzen 32 und die Abgabe an bzw. die Einlagerung in die Aufnahmepositionen 66 erfolgt vorzugsweise automatisiert durch das RGB 28.

Die Förderer 38 der Fig. 5 sind vorzugsweise lineare Stetigförderer, könnten generell aber auch durch Unstetigförderer (z.B. fahrerlose Transportfahrzeuge, AGV) implementiert sein.

Eine Länge der Förderer 38 (in der Querrichtung Z) ist so kurz wie möglich gewählt, um wenig Zeit für einen Transport der Quellpaletten 30 zwischen der jeweiligen Aufnahmeposition 66 und der entsprechenden Abgabeposition 58 zu benötigen, so dass dem Portalroboter 36 mehr Quellpaletten 30 pro Zeiteinheit (Durchsatz/Leistung) angedient werden können. Die Förderer 38 bewegen die Quellpaletten 30 automatisiert von den Aufnahmepositionen 66 in die entsprechenden Abgabepositionen 58, wo die Artikel 12 (nicht dargestellt) an den Portalroboter 36 zur Kommissionierung abgegeben werden. Der Portalroboter 36 bewegt seinen Querträger in der Längsrichtung X zur entsprechenden Abgabeposition 58, bewegt die Manipulationseinheit 37 mittels des Schlittens in der Querrichtung Z direkt über den gewünschten Artikel 12, senkt die Manipulationseinheit 37 ab, ergreift den (einzelnen) Artikel 12, hebt diesen vertikal an und bewegt die Manipulationseinheit 37 in der Längs- und Querrichtung zur Packposition 62, wo die zugehörige Zielpalette 34 gepuffert ist, um den Artikel 12 dort an der durch das Packmuster vorgegebenen Position und in der entsprechenden Ausrichtung vertikal abzusetzen.

Die Transportzeit der Quellpaletten 30 wird also im Wesentlichen durch einen Abstand zwischen dem Regal 24 und dem Portalroboter 36 bestimmt. Vorzugsweise wird der Portalroboter 36 in der Z-Richtung also direkt an das Regal 24 angrenzend angeordnet. Der Portalroboter 36 grenzt unmittelbar an die Längsseite 54 des Regals 24 an, die dem Portalroboter 36 zugewandt ist.

Der Portalroboter 36 kann sich auch am Regal 24 abstützen. Teile des Portalgestells können z.B. durch den Regalbau implementiert sein. In der Fig. 5 ist das Portalgestell aber vom Regalbau getrennt vorgesehen.

Die senkrechte Orientierung und gleichmäßige Verteilung der Förderer 38 über die Längsseite 54 des Regals erhöht die Anzahl der Abgabepositionen 58 innerhalb des Aktionsraums des Portalroboters 36. Dies bedeutet, dass mehr unterschiedlich beladene Quellpaletten 39 gleichzeitig beim Portalroboter 36 zur Kommissionierung bereitstellbar sind. Auf diese Weise kann die Kommissionierzeit ebenfalls verringert werden. Der Portalroboter 36 muss nicht auf die Bereitstellung weiterer Quellpaletten 30 warten, die zur Bearbeitung eines Auftrags benötigt werden.

Außerdem erhöht eine große Anzahl von Abgabepositionen 58 die Möglichkeit für eine sequenzierte Bereitstellung der Quellpaletten 30. Die auftragsspezifischen Packmuster erfordern die Bereitstellung der Artikel 12 in einer vorab bestimmten Reihenfolge. Schwere und/oder große Artikel 12 werden vorzugsweise in einem unteren Teil des Packmuster angeordnet, während leichte und/oder kleine Artikel 12 vorzugsweise in einem oberen Teil des auf der Zielpalette 34 zu bildenden Artikelstapels positioniert werden. Die Reihenfolge der Bereitstellung der entsprechenden Quellpaletten 30 an den Abgabepositionen 58 ist also relevant.

Zwar könnte man die Förderer 38 auch aus den Stirnseiten 70 des Regals 24 austreten lassen. In diesem Fall stünde aber nur eine einzige Aufnahmeposition 66 innerhalb des Regals 24 zur Verfügung, was den Durchsatz mindert. Diese eine Aufnahmeposition 66 würde einen "Flaschenhals" für das RBG 28 darstellen, weil dort keine Quellpaletten 30 vorübergehend geparkt werden können, wie es in der Anordnung der Fig. 5 aber der Fall ist. Außerdem würde sich ein Verlauf der Förderer 38 vom Regal 24 zum Portalroboter 36 komplexer gestalten, da Weichen und Kreuzungen eingesetzt werden müssten, um in entsprechend vielen Abgabepositionen 58 zu enden, wie es in Fig. 5 gezeigt ist.

In der Fig. 5 sind exemplarisch zwei Packpositionen 62-1 und 62-2 gezeigt, die ein tischartiges Gestell und optional auch Fördermittel aufweisen können, um die leere Zielpaletten 34 an vorab bestimmten Orten bereitzustellen, die mit der Packposition 62 übereinstimmen.

Während der Portalroboter 36 den Artikel 12 zur Zielpalette 34 bewegt, kann die Quellpalette 30 schon wieder in das Regal 24 zurück bewegt werden, indem die Quellpalette 30 in die Aufnahmeposition 66 bewegt wird, dort vom RBG 28 abgeholt wird und an den alten (oder alternativ an einen neuen) Lagerplatz 32 transferiert wird.

In der Fig. 5 sind die entsprechenden Bewegungen durch Pfeile angedeutet.

Die Abgabepositionen 58-1 bis 58-4 werden dynamisch betrieben, wobei vorzugsweise Artikel 12 der Zugriffshäufigkeit B und C angedient werden. Die Abgabepositionen 58-5 und 58-6, die in der Längsrichtung X außen benachbart zu den Packpositionen 62-1 und 62-2 angeordnet sind, werden statisch betrieben. Dies bedeutet, die Quellpaletten 30 verbleiben so lang dort, bis alle Artikel 12 entnommen wurden und diese Quellpaletten 30 "leer" sind. Diese Quellpaletten 30 werden nicht ins Regal 12 zurück gelagert. Die Quellpaletten 30 auf statischen Abgabepositionen enthalten vorzugsweise Artikel 12 der Zugriffshäufigkeit A.

Auf der Seite der (dynamischen) Abgabepositionen 58-1 bis 58-4 werden aus den oben genannten Gründen vorzugsweise keine Packpositionen 62 angeordnet. Die Packposition(en) 62 werden vorzugsweise (in der Querrichtung Z) gegenüberliegend zu den Abgabepositionen 58-1 bis 58-4 angeordnet.

In der Fig. 5 sind die Abgabepositionen 58-1 bis 58-4 in der Querrichtung Z beabstandet zu den Packpositionen 62 angeordnet, um dazwischen einen (optional vorgesehenen) Abführförderer 72 aufzunehmen, der verwendet werden kann, um Zwischenlagen (z.B. Kartons), die zwischen Artikellagen auf den Quellpaletten 30 verwendet werden, aus dem Aktionsraum zu entfernen. Der Abführförderer 70 kann auch zum Entfernen von Leerpaletten, z.B. mit der Manipulationseinheit 37, eingesetzt werden, die auf den statischen Abgabepositionen 58-5 und 58-6 geleert wurden, um Platz für neue Quellpaletten 30 zu schaffen.

Es versteht sich, dass die Positionen 58-1 bis 58-4 auch ohne Abstand in der Z-Richtung zu den Positionen 58-5, 58-6, 62-1 und 62-2 angeordnet werden können, um die Kommissionierzone 16 klein zu halten (verringerter Flächenbedarf).

Die dynamischen Abgabepositionen 58-1 bis 58-4 sind in der Anordnung der Fig. 5 vorzugsweise "oberhalb" des Förderers 72 und die statischen Abgabepositionen 58-5 und 58-6 sowie die Packpositionen 62-1 und 62-2 sind vorzugsweise "unterhalb" des Förderers 72 positioniert. Dies hat den Vorteil, dass sich die Materialflüsse der Abgabepositionen 58 und der Packpositionen 62 wenig oder gar nicht mischen, was in einem erhöhten Durchsatz resultiert.

Es versteht sich, dass in der Fig. 5 mehr oder weniger Packpositionen 62 als gezeigt eingesetzt werden können. Ferner versteht es sich, dass die Abgabepositionen 58-1 bis 58-4 auch statisch betrieben werden können und/oder die Abgabepositionen 58-5 und 58-6 auch dynamisch betrieben werden können. Die Abgabepositionen 58-5 und 58-6 können auch weggelassen werden oder durch weitere Packpositionen 62 ersetzt werden. Die Grundfläche des Aktionsraums, insbesondere dessen Länge in der X-Richtung, kann vergrößert oder verkleinert werden, um mehr oder weniger Positionen 58 und/oder 62 zu definieren.

Generell weist jedes System 10 ferner eine Steuerung 74 auf, die den Materialfluss steuert und die ferner vorzugsweise eingerichtet ist, das Packmuster zu bestimmen. Die Steuerung wertet dazu die Aufträge und/oder das Packmuster aus und erzeugt entsprechende Transportaufträge, um die erforderlichen Bewegungen der Quellpaletten 30 und Zielpaletten 34 unter Einsatz der Fördertechnik (z.B. RBG 28, Förderer 38, Rollenförderer 42, Gabelstapler 52, Verschiebewagen 60, etc.) zu veranlassen.

Es versteht sich, dass die Planungssoftware für das Packmuster auch auf einem Computer ausgeführt werden kann, der separat zur Steuerung 74 vorgesehen ist. Die Steuerung 74 bestimmt in diesem Fall die Quellpaletten 30, die für den Stapel benötigt werden, aus den Daten, die von der Planungssoftware erhalten werden, vorzugsweise über einen Artikel-Identifikator.

Die Fig. 5 veranschaulicht also eine "Kommissionierzelle", die durch einen Abschnitt des Regals 24 und den zugehörigen Portalroboter 36 bzw. dessen Aktionsraum gebildet wird, der direkt gegenüber liegend zum Regalabschnitt angeordnet ist und der über mehrere der Förderer 38, die durch das Regal 24 bzw. den entsprechenden Abschnitt des Regals 24 tunneln, direkt mit dem Regal 24 verbunden ist.

Es versteht sich, dass mehrere dieser Kommissionierzellen direkt benachbart, oder auch beabstandet, entlang einer oder beider Längsseiten des Regals 24 angeordnet werden können.

Ferner versteht es sich, dass im Allgemeinen jeder der Portalroboter 36 einen eigenen Aktionsraum definiert, der üblicherweise durch das Portalgestell begrenzt ist. Wenn mehrere Portalroboter 36 direkt benachbart zu einander angeordnet sind, können diese sich ein (einziges) Portalgestell teilen. In diesem Fall wird jeder der Portalroboter 36 im Wesentlichen durch seine Manipulationseinheit 37 und den zugehörigen Querträger geprägt, der in der X-Richtung auf dem Portalgestell beweglich ist. Die Bewegungen können überlappend erfolgen, d.h. bestimmte Bereiche des (gemeinsamen) Portalgestells können von mehreren Querträgern (zeitlich versetzt) erreicht werden. Dies bedeutet, dass sich die Aktionsräume überlappen können. Die Grenzen der Aktionsräume sind in diesem Fall nicht starr, wie sonst üblich, sondern dynamisch.

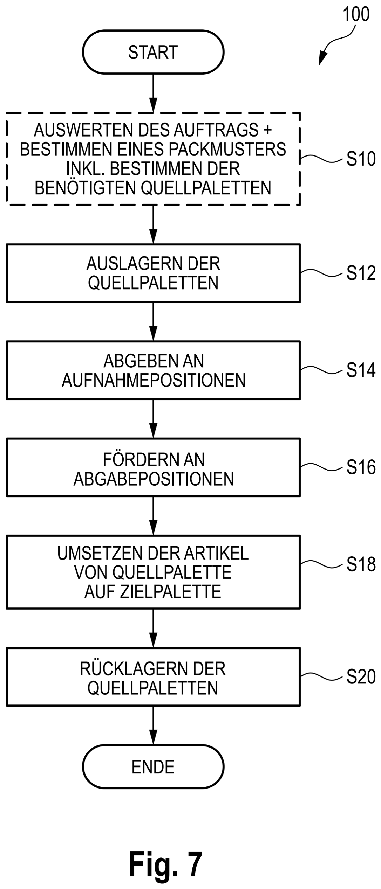

Fig. 7 zeigt ein Flussdiagramm eines Verfahrens 100 zum Kommissionieren der Artikel 12 gemäß Kommissionieraufträgen.

In einem ersten optionalen Schritt S10 wird der Auftrag mittels der Steuerung 74 und/oder des separaten Computers ausgewertet, um das Packmuster sowie die dazu benötigten Quellpaletten 30 zu bestimmen.

In einem Schritt S12 werden die entsprechenden Quellpaletten 30 ausgelagert, wie oben beschrieben.

In einem Schritt S14 werden die ausgelagerten Quellpaletten 30 an die Aufnahmepositionen 66 abgegeben, wie oben beschrieben.

In einem Schritt S16 werden die abgegebenen Quellpaletten 30 an die entsprechenden Aufnahmepositionen 58 mittels der Förderer 38 gefördert.

In einem Schritt S18 werden die Artikel 12 mittels des Portalroboters 36 von den Quellpaletten 30 auf die Zielpalette 34 umgesetzt. Der Schritt des Umsetzens S18 umfasst das Aufnehmen der Artikel 12 von den Quellpaletten 30 an den Aufnahmepositionen 58, das Bewegen der aufgenommenen Artikel 12 an eine durch das Packmuster vorgegebene Position auf der Zielpalette 34, sowie vorab ggf. eine entsprechende Ausrichtung des Artikels 12, und ein Packen des aufgenommenen Artikels 12 auf die Zielpalette gemäß dem Packmuster.

In einem optionalen Schritt S20 werden die Quellpaletten 30 zurückgelagert, die während der vorhergehenden Kommissionierung nicht geleert wurden. Diese Quellpaletten 30 sitzen auf den oben erwähnten dynamischen Aufnahmepositionen 58.

Fertige Zielpaletten 34 können anschließend in die Versandzone 20 transportiert werden (nicht dargestellt).

Danach endet das Verfahren 100.

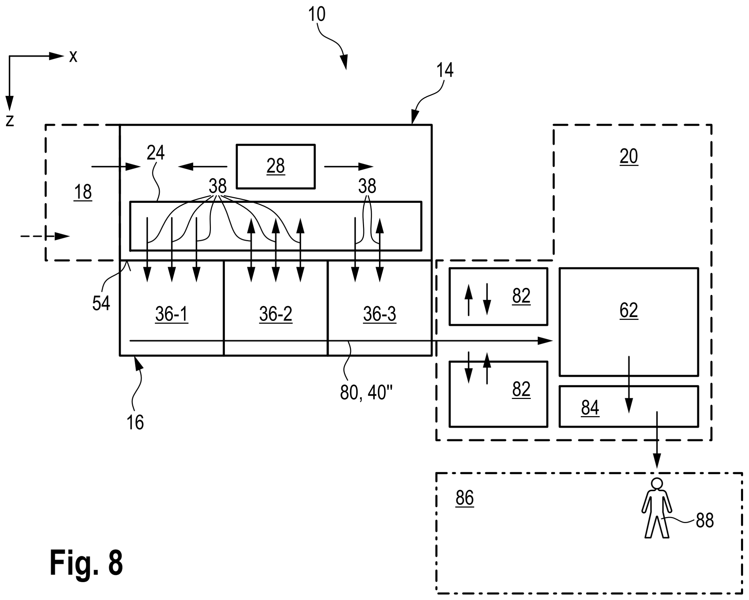

Fig. 8 zeigt Blockdiagramm einer weiteren Ausführungsform des Systems 10, das grundsätzlich gleich wie die Systeme 10 der vorhergehenden Fig. 1 bis 7 aufgebaut ist, so dass nachfolgend lediglich auf die Unterschiede eingegangen werden wird.

Der Aufbau des Systems 10 der Fig. 8 ist im Wesentlichen gleich, insbesondere in Bezug auf die Lagerzone 14 und die Kommissionierzone 16. Das System 10 der Fig. 8 weist wieder die Lagerzone 14 und die Kommissionierzone 16 auf, die direkt aneinandergrenzend angeordnet sind und die wiederum über mehrere Förderer 38 direkt miteinander verbunden sind. Dies bedeutet mit anderen Worten, dass die Förderer 38 durch das Regal 24 "tunneln" hinein in die Aktionsräume der exemplarisch drei Portalroboter 36-1 bis 36-3, die entlang der Längsseite 54 des Regals 24 ausgerichtet sind.

Ein Unterschied zu den anderen Systemen 10 der Fig. 1 bis 7 ist darin zu sehen, dass die Packposition 62 (als Packstation inklusive einem Packroboter) außerhalb der Aktionsräume der Portalroboter 36 angeordnet ist. Exemplarisch ist in der Fig. 8 eine (einzige) Packposition 62 veranschaulicht. Es versteht sich, dass mehr als eine Packposition 62 vorgesehen werden kann, worauf nachfolgend noch näher eingegangen werden wird.

Die Packposition 62 ist über einen Packpositionszuführförderer 80 mit den Aktionsräumen der Portalroboter 36 verbunden. Der Packpositionszuführförderer 80 erstreckt sich durch die Aktionsräume der Portalroboter 36. Der Packpositionszuführförderer 80 ist vorzugsweise parallel zur Längsseite 54 des Regals 24 ausgerichtet und kann insbesondere mittig innerhalb der Aktionsräume der Portalroboter 36 angeordnet sein. In der Fig. 8 ist der Packpositionszuführförderer 80 in einem äußeren Randbereich der Aktionsräume der Portalroboter 36 angeordnet.

Der Packpositionszuführförderer 80 kann z.B. auch durch den Abführförderer 72 (vgl. Fig. 1, 4 und 5) realisiert werden. Der Packpositionszuführförderer 80 kann alternativ als weitere Fördertechnik 40", vorzugsweise oberhalb des Abführförderers 72, vorgesehen werden.

Der Packpositionszuführförderer 80 grenzt vorzugsweise in der Z-Richtung direkt an dynamische und/oder statische Bereitstellungsplätze an, die durch die entsprechenden Abgabepositionen 58 (nicht gezeigt) realisiert sind. Die statische Bereitstellung ist in Fig. 8 durch einfache Pfeile für die Förderer 38 veranschaulicht. Die dynamische Bereitstellung ist in Fig. 8 durch Doppelpfeile für die Förderer 38 veranschaulicht. Die Aktionsräume können generell ausschließlich dynamische (vgl. bei 36-2) oder statische (vgl. bei 36-1) Bereitstellungsplätze sowie einen Mix aus dynamischen und statischen Bereitstellplätzen (vgl. bei 36-3) aufweisen. Selbstverständlich können die Bereitstellplätze auch auf gegenüberliegenden Seite des Förderers 80 angeordnet sein, wie es entsprechend in der Fig. 4 bereits für den Förderer 72 veranschaulicht ist.

In dem in der Fig. 8 veranschaulichten Fall, wo innerhalb der Aktionsräume der Portalroboter 36-1 bis 36-3 keine Packpositionen 62 definiert sind, ist zumindest eine Packposition 62 an einem stromabwärtigen Ende des Packpositionszuführförderers 80 vorgesehen. Zwischen dieser Packposition 62 und dem stromabwärtigen Ende des Packpositionszuführförderers 80 können ein oder mehrere Sequenzierungspuffer 82 angeordnet werden, um Artikel 12 zwischenzulagern, die zum Packen eines aktuellen Auftrags nicht benötigt werden, die aber zum Packen eines zukünftigen Auftrags noch benötigt werden.

Jeder Sequenzierungspuffer 82 ermöglicht somit die sogenannte "zweistufige Kommissionierung", wobei in einer ersten Stufe mehrere Aufträge, die einen gleichen Artikeltyp enthalten, gruppiert werden, um den entsprechenden Artikeltyp in der entsprechenden Anzahl der oder den Quellpaletten 30 zu entnehmen. Dies reduziert die Bewegungen der entsprechenden Quellpaletten 30 zwischen der Lagerzone 14 und der Kommissionierzone 16. Dies bedeutet mit anderen Worten, dass die Portalroboter 36 in der Fig. 8 lediglich zum Depalettieren der Quellpaletten 30 eingesetzt werden. Die durch die Depalettierung vereinzelten Artikel 12 werden von den entsprechenden Portalrobotern 36 auf den Packpositionszuführförderer 80 umgesetzt, der die umgesetzten Artikel 12 entweder direkt zur Packposition 62 transportiert oder zu dem oder den Sequenzierungspuffern 82 transportiert. Aus den Sequenzierungspuffern 82 können solche Artikeltypen herausgeholt werden, die zu einem späteren Zeitpunkt zum Packen eines anderen Auftrags benötigt werden, wobei die entsprechenden Quellpaletten 30 zu diesem Zeitpunkt bereits wieder in die Lagerzone 14 zurücktransportiert wurden. Der Sequenzierungspuffer 82 "verteilt" die gepufferten Artikel 12 entsprechend den aktuellen zu packenden Aufträgen.

Die Sequenzierungspuffer 82 werden vorzugsweise durch Lagerlifte oder vertikalumlaufende Paternoster-Lifte implementiert, die einen geringen Flächenbedarf haben und die nachfolgend noch genauer beschrieben werden.

Die zweistufige Kommissionierung kann auch angewendet werden, wenn der Packpositionszuführförderer 80 zur Versorgung mehrerer Packpositionen 62 eingesetzt wird, die ausschließlich innerhalb, oder ergänzend auch innerhalb, der Aktionsräume der Portalroboter 36 der Fig. 8 positioniert sein können. Dies bedeutet mit anderen Worten, dass innerhalb der Aktionsräume der Portalroboter 36 der Fig. 8 auch weitere, oder ausschließlich dort, Packpositionen 62 vorhanden sein können, die über den Packpositionszuführförderer 80 mit Artikeln 12 versorgt werden, die zuvor von Quellpaletten 30 depalettiert wurden, die der entsprechende Portalroboter 36 (insbesondere bei einer nicht überlappenden Betriebsweise der Portalroboter 36), zu dem die jeweilige Packposition 62 gehört, gar nicht direkt erreichen kann. Der Packpositionszuführförderer 80 verteilt in diesem Fall wiederum die bereits depalettierten Artikel 12 über die Packpositionen 62, die entfernt zum bzw. nicht überlappend mit dem depalettierenden Portalroboter 36 angeordnet sind.

Die Fig. 8 zeigt also den Packpositionszuführförderer 80, der für die Zuführung und ggf. Verteilung der depalettierten Artikel 12 eingesetzt wird.

Ferner ist es generell möglich, einen Lagerpuffer 84 für fertig gepackte Zielpaletten 34 vorzusehen. Dieser Puffer 84 dient zur Zwischenlagerung von fertig gepackten Zielpaletten 34. Insbesondere kann dieser Puffer 84 wiederum durch einen Lagerlift oder einen vertikal umlaufenden Paternoster-Lift realisiert sein, der auf einer Seite an die Packposition(en) 62 gekoppelt ist und der auf einer gegenüberliegenden Seite an einen Verkaufsraum oder Showroom 86 gekoppelt sein kann, um Kunden 88 fertig gepackte Zielpaletten 34 direkt auszuhändigen. Dies ist insbesondere in der Möbelindustrie von Vorteil, wo die Kunden 88 während eines Einkaufs durch ein Möbelhaus laufen und währenddessen Bestellungen, z.B. online über eine Smartphone, platzieren können, die sofort nach ihrer Platzierung von dem System 10 bearbeitet werden. Sobald der Kunde 88 mit seinem Einkauf fertig ist, kann sich der Kunde 88 zum Puffer 84 bewegen, dort z.B. einen ihm zugeordneten, kundenspezifischen Code eingeben und die fertig gepackte Zielpalette 34 direkt mitnehmen.

Der Aufbau und die Funktionsweise von Lagerliften und vertikal-umlaufenden Paternoster-Liften sind in der DE 10 2020 114 743.0 offenbart.

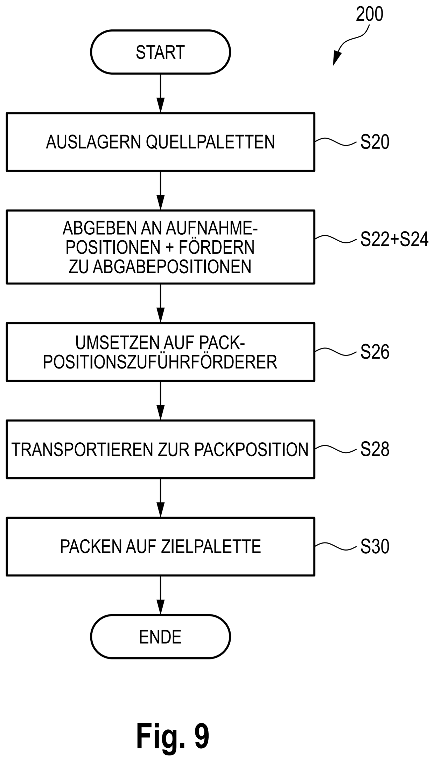

Fig. 9 zeigt ein weiteres Verfahren 200 zum Kommissionieren von Artikeln 12 gemäß Kommissionier-Aufträgen, das die folgenden Schritte aufweist.

In einem ersten Schritt S20 werden die Quellpaletten 30 ausgelagert, die die Artikel 12 enthalten, die zum Schichten bzw. Packen der Artikel 12 gemäß einem Packmuster auf einer Zielpalette 34 benötigt werden. Die Auslagerung erfolgt aus den Lagerplätzen 32 des Regals 24 mittels der RBG 28.

In einem Schritt S22 werden die ausgelagerten Quellpaletten 30 an die Aufnahmepositionen 66 mittels der RBG 28 abgegeben. Die Aufnahmepositionen sind 66 innerhalb des Regals 24 angeordnet. Die Förderer 38 erstrecken sich, insbesondere linear, vom Regal 24 zu zumindest einem Portalroboter 36, der entlang einer Längsseite 54 des Regals 24, vorzugsweise unmittelbar, seitlich angrenzend an das Regal 24 angeordnet ist.

In einem Schritt S24 werden die abgegebenen Quellpaletten 30 mit den Förderern 38 von den Aufnahmepositionen 66 zu den Abgabepositionen 58 der Förderer 38 transportiert, wobei die Abgabeposition 58 innerhalb des Aktionsraums des zumindest einen Portalroboters 36 positioniert sind.

In einem Schritt S26 werden die Artikel 12, die zum Schichten gemäß dem Packmuster auf die Zielpalette 34 benötigt werden, mit der Manipulationseinheit 37 des Portalroboters 36 von den Quellpaletten 30 auf den Packpositionszuführförderer 80 umgesetzt, der sich durch den Aktionsraum des Portalroboters 36 erstreckt und der mit der Packposition 62 verbunden ist.

In einem Schritt S28 werden die umgesetzten Artikel 12 mit dem Packpositionszuführförderer 80 zur Packposition 62 transportiert, die innerhalb eines weiteren Aktionsraums eines weiteren Portalroboters 36, der über die Förderer 38 ebenfalls direkt mit dem Regal 24 verbunden ist, positioniert ist und/oder die außerhalb von Aktionsräumen der Portalroboter 36 positioniert ist, wie es in der Fig. 8 gezeigt ist.

In einem Schritt S30 werden dann die umgesetzten und transportierten Artikel 12, vorzugsweise mit einem Portalroboter 36 oder einem Knickarmroboter, auf die Zielpalette 34 gepackt, die an der Packposition 62 positioniert ist.

Das Packen erfolgt vorzugsweise durch Aufnehmen der Artikel 12 von dem Packpositionszuführförderer 80, Anheben und Bewegen an die Position, die durch das Packmuster vorgegeben ist, und Absetzen an dieser Position, was vorzugsweise zusätzlich ein Ausrichten des Artikels 12 gemäß Packmuster umfasst.

**Bezugszeichenliste**

| | | | |
|---|---|---|---|
| 10 | Kommissioniersystem | 72 | Abführförderer |
| 12 | (Flatpack-) Artikel | 80 | Packpositionszuführförderer |
| 14 | Lagerzone | 82 | Sequenzierungspuffer |
| 16 | Kommissionierzone | 84 | Lagerpuffer |
| 18 | Wareneingangszone | 86 | Verkaufsraum |
| 20 | Versandzone | 88 | Kunde |
| 22 | Zielpalettenpuffer | | |
| 24 | Regal | | |
| 26 | Regalgasse | | |
| 28 | Regalbediengerät | | |
| 30 | Quellpalette | | |
| 32 | Lagerplatz | | |
| 34 | Zielpalette | | |
| 36 | Portalroboter | | |
| 38 | Förderer | | |
| 39 | Track-in-Station | | |
| 40, 40' | Fördertechnik | | |
| 42 | Rollenförderer | | |
| 44 | Schwenkarm | | |
| 46 | Vakuumheber | | |
| 48 | Rollentisch | | |
| 50 | Lichtvorhang | | |
| 52 | Gabelstapler | | |
| 54 | Längsseite | | |
| 55, 56 | Endabschnitte von 38 | | |
| 58 | Abgabeposition | | |
| 60 | Verschiebewagen | | |
| 62 | Packposition | | |
| 64 | Aktionsraum | | |
| 66 | Aufnahmeposition | | |
| 68 | Längsseite von 24 | | |
| 70 | Stirnseite von 24 | | |

## Patentansprüche

1. System (10) zum Kommissionieren von Artikeln (12), insbesondere Flatpack-Artikeln (12), gemäß Kommissionier-Aufträgen, wobei das System (10) aufweist:
ein Regal (24), das sich im Wesentlichen entlang einer Längs- und Höhenrichtung (X, Y) des Systems (10) erstreckt und das eine Vielzahl von Lagerplätzen (32) aufweist, die eingerichtet sind, Quellpaletten (30) zu lagern;
einen ersten Portalroboter (36) mit einer Manipulationseinheit (37), der eingerichtet ist, die Artikel (12) umzusetzen;
eine Packposition (62), die zur Pufferung einer Zielpalette (34) eingerichtet ist;
eine Vielzahl von Förderern (38); und
eine Steuerung (74), die vorzugsweise eingerichtet ist, für jeden der Aufträge ein auftragsspezifisches Packmuster zu bestimmen, um durch den ersten Portalroboter (36) mehrere der Artikel (12) gemäß dem jeweiligen Auftrag von einer oder mehreren der Quellpaletten (30) automatisiert der Packposition (62) zuzuführen;
wobei jeder der Förderer (38) eine Aufnahmeposition (66), die innerhalb des Regals (24) positioniert ist und die zur Aufnahme der Quellpaletten (30) eingerichtet ist, sowie eine Abgabeposition (58) aufweist, die innerhalb eines Aktionsraums (64) des ersten Portalroboters (36) positioniert ist und die zur, vorzugsweise dynamischen, Bereitstellung der Quellpaletten (30) eingerichtet ist;
wobei die Steuerung (74) ferner eingerichtet ist zu veranlassen, dass solche der Quellpaletten (30) von den Lagerplätzen (32) über die Aufnahmepositionen (66) zu den Abgabepositionen (58) transportiert werden, die die Artikel (12) speichern, die zum Packen der Artikel (12) auf die Zielpalette (34) gemäß dem jeweiligen Packmuster benötigt werden;
wobei der erste Portalroboter (36) den Aktionsraum (64) definiert, innerhalb welchem die Manipulationseinheit (37) beweglich ist und der zumindest die Abgabepositionen (58) der Förderer (38) enthält; und
wobei der erste Portalroboter (36) eingerichtet ist, die Artikel (12), die zum Packen gemäß dem jeweiligen Packmuster benötigt werden, von den Quellpaletten (30) an den Abgabepositionen (58) aufzunehmen und an einen Packpositionszuführförderer (80) abzugeben, der sich durch den Aktionsraum (64) erstreckt und der mit der Packposition (62) hinsichtlich eines Materialflusses verbunden ist, wobei die Packposition (62) innerhalb eines Aktionsraums (64) eines zweiten Portalroboters (36), der über weitere der Förderer (38) direkt mit dem Regal (24) verbunden ist, positioniert ist oder wobei die Packposition (62) außerhalb der Aktionsräume (64) der Portalroboter (36) positioniert ist.

2. System (10) nach Anspruch 1, das mindestens einen zweiten Portalroboter (36) umfasst, wobei sich der Packpositionszuführförderer (80) durch die Aktionsräume der Portalroboter (36) erstreckt.

3. System (10) nach Anspruch 1 oder 2, wobei der Packpositionszuführförderer (80) über mindestens einen Sequenzierungspuffer (82) mit der Packposition (62) verbunden ist, die außerhalb der Aktionsräume (64) positioniert ist.

4. System (10) nach einem der Ansprüche 1 bis 3, wobei jeder der Portalroboter (36) entlang einer Längsseite (54) des Regals (12) angeordnet ist und über mindestens zwei der Förderer (38) mit den Artikeln (12) auf den Quellpaletten (30) versorgt wird, die zum Packen gemäß dem jeweiligen Packmuster benötigt werden.

5. System (10) nach Anspruch 3 oder 4, wobei mindestens eine weitere Packposition (62) vorgesehen ist, die vorzugsweise innerhalb des Aktionsraums (64) des ersten Portalroboters (36) positioniert ist.

6. System (10) nach einem der Ansprüche 1 bis 5, wobei die Abgabepositionen (58) der Förderer (38) als dynamische Bereitstellungsplätze für die Quellpaletten (30) entlang einer ersten Längsseite des Packpositionszuführförderers (80) angeordnet sind und wobei weitere Abgabepositionen (58), die hinsichtlich des Materialflusses an das Regal (24) gekoppelt sind, als statische Bereitstellungsplätze für die Quellpaletten (30) entlang einer zweiten Längsseite des Packpositionszuführförderers (80) angeordnet sind, die der ersten Längsseite gegenüberliegt.

7. System nach einem der Ansprüche 1 bis 6, wobei fertig gepackte Zielpaletten (34) in einem Lagerpuffer (84), insbesondere in einem Lagerlift, gepuffert werden, der auf einer Seite an die Packposition (62) gekoppelt ist und der auf einer anderen Seite an einen Verkaufsraum zur Übergabe an und zur direkten Abholung durch Kunden (88) gekoppelt ist.

8. Verfahren (200) zum Kommissionieren von Artikeln (12) gemäß Kommissionier-Aufträgen, das die Schritte aufweist:
Auslagern (S20) von Quellpaletten (30), die die Artikel (12) speichern, die zum Packen der Artikel (12) gemäß einem auftragsspezifischen Packmuster auf eine Zielpalette (34) benötigt werden, aus Lagerplätzen (32) eines Regals (24);
Abgeben (S22) der auslagerten Quellpaletten (30) an Aufnahmepositionen (66) von Förderern (38), deren Aufnahmepositionen (66) innerhalb des Regals (12) angeordnet sind, wobei sich die Förderer (38), insbesondere linear, vom Regal (12) bis zu einem ersten Portalroboter (36) erstrecken, der entlang einer Längsseite (54) des Regals (12), vorzugsweise unmittelbar, seitlich angrenzend an das Regal (12) angeordnet ist;
Transportieren (S24), mit den Förderern (38), der abgegebenen Quellpaletten (30) von den Aufnahmepositionen (66) zu Abgabepositionen (58) der Förderer (38), die innerhalb eines Aktionsraums (64) des ersten Portalroboters (36) positioniert sind;
Umsetzen (S26) der Artikel (12), die zum Packen gemäß dem auftragsspezifischen Packmuster auf die Zielpalette (34) benötigt werden, mit einer Manipulationseinheit (37) des ersten Portalroboters (36), von den Quellpaletten (34) auf einen Packpositionszuführförderer (80), der sich durch den Aktionsraum (64) des ersten Portalroboters (36) erstreckt und der hinsichtlich eines Materialflusses mit einer Packposition (62) verbunden ist;
Transportieren (S28) der umgesetzten Artikel (12) mit dem Packpositionszuführförderer (80) zu der Packposition (62), die innerhalb eines Aktionsraums (64) eines zweiten Portalroboters (36), der über weitere der Förderer (38) direkt mit dem Regal (24) verbunden ist, positioniert ist oder die außerhalb der Aktionsräume (64) der Portalroboter (36) positioniert ist; und
Packen (S30) der umgesetzten und transportierten Artikel (12), vorzugsweise mit einem Portalroboter (36) oder einem Knickarmroboter, auf die Zielpalette (34), die an der Packposition (62) positioniert ist.

9. Verfahren (200) nach Anspruch 8, wobei die Artikel (12) in einer ungeordneten Reihenfolge umgesetzt und in einem Sequenzierungspuffer (82) gepuffert werden, der eingerichtet ist, die Artikel (12) in einer durch das auftragsspezifische Packmuster vorgegebenen Reihenfolge auszugeben.

10. Verfahren (200) nach Anspruch 8 oder 9, wobei mehrere Packpositionen (62) innerhalb von Aktionsräumen (64) von mehreren Packrobotern (64) vorgesehen sind und wobei die Kommissionierung zweistufig erfolgt, indem die Aufträge vorab nach Artikeltypen analysiert und gruppiert werden, indem die Artikel (12) von mehreren Aufträgen in einer ersten Kommissionierstufe von dem ersten Portalroboter (36) auf den Packpositionszuführförderer (80) umgesetzt werden und indem die Artikel (12) in einer zweiten Kommissionierstufe mit dem Packpositionszuführförderer (80) auftragsspezifisch über die Packpositionen (62) verteilt werden.

11. Verfahren (200) nach einem der Ansprüche 8 bis 10, wobei fertig gepackte Zielpaletten (34) in einem Lagerpuffer (84), insbesondere in einem Lagerlift, gepuffert werden, der auf einer Seite an die Packstation (62) gekoppelt ist und der auf einer anderen Seite an einen Verkaufsraum zur Übergabe an und zur direkten Abholung durch Kunden (88) gekoppelt ist.

12. Verfahren (200) nach einem der Ansprüche 8 bis 11, wobei die Quellpaletten (30) gemäß dem jeweiligen Packmuster sequenziert depalettiert werden.
